# EUROPEAN PATENT SPECIFICATION

(11) **EP 3 761 137 B1**
(45) Date of publication and mention of the grant of the patent: **04.08.2021**
(21) Application number: 19183731.9
(22) Date of filing: 01.07.2019
(51) Int. Cl.: B60W 60/00, G08G 1/16, G05D 1/02

(54) **INSTRUCTING AUTONOMOUS OBJECTS**
ANWEISUNG VON AUTONOMEN OBJEKTEN
COMMANDE D'OBJETS AUTONOMES

(43) Date of publication of application: 06.01.2021
(73) Proprietor: FUJITSU LIMITED, Kanagawa, 211-8588 (JP)
(72) Inventor: NASEER BUTT, Aisha, Hayes, Middlesex UB4 8LB (GB); CHATON, Thomas, Southall, Middlesex UB1 3JA (GB); JABER, Mona, London, WC1A 2JR (GB)
(74) Representative: Haseltine Lake Kempner LLP

(56) References cited:
- EP-A1- 2 093 741
- US-A1- 2017 316 333
- US-A1- 2018 189 323
- US-A1- 2018 307 245

## Description

### INTRODUCTION

This invention lies in the field of autonomous mobile objects with wireless connectivity, and in particular relates to a mechanism for using realtime sensor data to map a region and instruct motion paths.

Autonomous, or "self-driving" vehicles, and partially-autonomous vehicles, are being developed, and are predicted to account for a significant proportion of car sales in the future. According to some estimates, the overall market may reach an estimated $1.5 trillion by 2030. It is predicted that autonomous and partially-autonomous vehicles will enter the market in around 2021.

A key barrier to market is safety, and in particular, the ability of autonomous and partially-autonomous vehicles to avoid collisions needs to be established.

Implementations in which the vehicle itself hosts the computing equipment responsible for collision avoidance suffer because the data from a large number of sensors need to be processed quickly, which requires high power computational equipment. Furthermore, accuracy suffers from sensor blind spots.

Implementations in which collision avoidance is delegated to the cloud are limited by the requirement for a high robustness, high bandwidth, low latency, network connection between the cloud and the vehicle.

Present techniques cannot predict or track behaviour of groups (swarms) of moving objects in real-time. Predicting point-specific contacts between objects is a technical challenge. Performing intelligent decision making in the cloud is inefficient and introduces latency into the collision avoidance mechanism.

It is desirable to provide a collision avoidance mechanism that at least partially overcomes one or more problems with the present techniques.

US 2018/0307245 A1 discloses system and methods for creating perception based intelligence for augmenting the on-board capabilities of autonomous vehicles and for coordinating the traffic flow of connected-autonomous vehicles. Perception-based intelligence is created on the basis of leveraging the perception outputs of, one or more vision-perception sensors in various locations, while having a field-of-view, or a range-of-perception-sensing, of a pre-determined physical space. Perception-based intelligence is made shareable, in a shared coordinate-frame. Various methods are disclosed for encoding and representing the locations coordinates of perception outputs relating to transient, obstacles and any free-space, such that these encoded outputs, could be provisioned to various types of connected-autonomous vehicles, either directly or through an intelligent transport system. Systems and methods are disclosed for creating perception based enablements, such as; look-ahead and non-line-of sight perception, planned obstacle avoidance ahead of approach, autonomous-traffic flow coordination, autonomous-manoeuvre safety guidance, zone entry permissions and priorities for use-of-space or right-of-passage.

US 2017/0316333 A1 discloses systems, methods and apparatus configured to implement automatic semantic classification of a detected object(s) disposed in a region of an environment external to an autonomous vehicle. The automatic semantic classification may include analyzing over a time period, patterns in a predicted behavior of the detected object(s) to infer a semantic classification of the detected object(s). Analysis may include processing of sensor data from the autonomous vehicle to generate heat maps indicative of a location of the detected object(s) in the region during the time period. Probabilistic statistical analysis may be applied to the sensor data to determine a confidence level in the inferred semantic classification. The inferred semantic classification may be applied to the detected object(s) when the confidence level exceeds a predetermined threshold value (e.g., greater than 5%).

### STATEMENTS

The present invention is defined by the appended independent claims, to which reference should now be made. Specific embodiments are defined in the dependent claims. Embodiments include: a method of instructing a motion path of a mobile object with wireless connectivity, the mobile object being controllable in an autonomous or partially-autonomous mode by an on-board object control device; the method comprising:at a first computing apparatus, maintaining a four-dimensional map of a physical region of interest over a timeframe of interest, the map including static and dynamic map objects representing corresponding static and dynamic physical objects within the physical region, one of the dynamic map objects representing the mobile object, the four dimensions being three spatial dimensions and time, and the timeframe including a future period, being a defined duration into the future beyond the present; the four-dimensional map coordinates of each dynamic map object being based on realtime sensor data from the physical region indicating the location of the corresponding dynamic physical object, and a predicted path of the dynamic map object in the future period; using the four-dimensional map to determine a motion path for the mobile object in the future period that solves an objective function with one or more factors dependent upon the motion path of the mobile object; and instructing the mobile object to follow the determined motion path.

Advantageously, embodiments maintain a four-dimensional map, which predicts object locations into the future, to predict spatial interactions between objects, and instruct an autonomous vehicle to adopt a motion path that will solve an objective function. Embodiments compute a four-dimensional dynamic map of objects in a physical region of interest. Predicted paths for dynamic objects predict the trajectory of the objects which allows the likelihood of an object to arrive at a specific location at a specific time to be mapped. Embodiments enable a system where the locations of multiple static and dynamic objects (both vehicle and non-vehicle) along with their behaviours are predicted and tracked in a map to form a four-dimensional map. Embodiments continuously update the four-dimensional map using real-time sensor data. The map is used to assess potential motion paths with respect to an objective function, and thus to determine a motion path that best satisfies the objective function. The determined motion path is instructed.

Optionally, the mobile object is a vehicle, and the on-board object control device is a vehicle control device.

Optionally, the objective function is minimising spatial interactions between the dynamic map object representing the mobile object and other static or dynamic map objects, a spatial interaction being a distance between the objects being less than a predefined threshold.

The objective function may be optimising mobility in the physical region while reducing pollution (eg noise pollution, CO2 generation, or another form of pollution). In particular:
Optionally, the objective function is optimising mobility per unit of pollution; or wherein the objective function is maximising vehicle occupancy, or wherein the objective function is enabling an electric vehicle to reach a defined destination in view of remaining battery life.

Predicted paths of dynamic objects may be computed by the first computing apparatus, or by another computing apparatus connected thereto. It may be that a specific artificial intelligence algorithm running on the computing apparatus is operable to compute the predicted paths, which may be based on historical paths taken by objects with characteristics matching (or being within a threshold distance of) those of the pertinent object. In the specific case of the subject vehicle, it may be that:
Optionally, the predicted path of each dynamic map object comprises a predicted three-spatial-dimension map coordinate at each of a plurality of timesteps during the future period; for one or more dynamic map objects representing vehicles being driven in an autonomous or partially autonomous mode by a respective on-board control device, the predicted path of the mobile object is computed by the on-board control device and transmitted to the first computing apparatus for mapping.

Advantageously, such embodiments leverage the algorithm or software controlling the path of the vehicle to provide some or all of the data for predicting a path of the subject vehicle.

Embodiments leverage a network of sensors, both vehicle-mounted and stationary, observing the physical region of interest, to constrain the predicted paths of dynamic objects in the region of interest. In particular, maintaining the four-dimensional map comprises aggregating, from a plurality of sensors, the realtime sensor data indicating the location within the physical region of dynamic physical objects corresponding to dynamic map objects; and the mapping the three-spatial-dimension map coordinate at each of the plurality of timesteps during the future period for each dynamic map object is based on the location of the corresponding dynamic physical object in the realtime sensor data.

Furthermore, the plurality of sensors may include sensors mounted on dynamic physical objects within the physical region, and sensors mounted on static physical objects and configured to take readings of the physical region.

Optionally, the plurality of sensors includes sensors mounted on dynamic physical objects within the physical region, sensors mounted on the mobile object, sensors mounted on stationary objects within the physical region, and/or sensors mounted on dynamic physical objects outside of the physical region and taking readings from within the physical region.

Advantageously, such embodiments specifically predict collisions between objects, and instruct the vehicle control device to take a motion path which avoids the predicted collision.

Optionally, the spatial interaction between the dynamic object representing the mobile object and another of the static and dynamic map objects is the contemporaneous three-spatial-dimension map coordinates of the two objects being within a defined contact threshold distance.

Optionally, the spatial interaction is identified by comparing the predicted path of the dynamic map object representing the mobile object with: the predicted paths of dynamic map objects having a current location within a first defined threshold distance of the current location of the dynamic map object representing the mobile object; and with the locations of static map objects within a second defined threshold distance of the current location of the dynamic map object representing the mobile object.

The first defined threshold distance may be based on one or more from among current speed of the subject vehicle, risk profile of the physical region of interest, historical information relating to the subject vehicle, historical information relating to the driver of the subject vehicle. The second define threshold distance may be based on one or more from among a configurable setting specific to the subject vehicle, a global configurable setting for all vehicles in the physical region of interest.

Optionally, the method further comprises, at a second computing apparatus, borne by the mobile object: periodically querying the first computing apparatus; and at the first computing apparatus: responding to the query by transmitting to the second computing apparatus a query response including the predicted path, or a portion thereof, of any dynamic map object having a current position, or predicted path, indicating a distance from the vehicle is or will be within a distance defined by a distance threshold, at any time during a future period of interest; and at the second computing apparatus: using the predicted path of the vehicle and the predicted paths of the dynamic map objects in the query response to identify, as a map event, any dynamic map object having a predicted path contemporaneously within a defined contact threshold distance of the predicted path of the mobile object during the future period of interest.

Advantageously, such embodiments filter the data forming the four-dimensional map for data relevant to the subject vehicle, so that latency is reduced, and bandwidth is preserved for other vehicles and/or other processes.

Optionally, the distance threshold is determined by the first computing apparatus or by the second computing apparatus, and the distance threshold is based on historical data relating to the vehicle.

Optionally, maintaining the four-dimensional map includes augmenting the static and dynamic map objects with one or more predicted dynamic map objects, the predicted dynamic map objects being a subset of dynamic map objects and appearing in the map at a mapped instant between a current time and the end of the future period, and the appearance of the predicted dynamic map object being predicted based on historical information relating to appearances of dynamic physical objects in the physical domain, the realtime sensor information from the physical domain, and/or notification of an event in the physical domain.

Advantageously, such embodiments leverage data sources other than the realtime sensors to augment the map with additional information, i.e. predicted object locations and movements, which broadens the scope of spatial interactions that can be predicted, and improves the ability of the map to be used to solve an objective function for the subject vehicle.

In particular: the spatial interaction of the map event may be one or more of the predicted dynamic map objects restricting vehicle movement on a location on a route the on-board control device is controlling the vehicle to follow, at a mapped instant at which the vehicle is predicted to be at said location.

Such embodiments utilise the four-dimensional map to improve the ability of the vehicle control device to select a route which will optimise an objective function for the subject vehicle, for example, arriving as early as possible, or within a predefined time limit.

Embodiments of another aspect include a system for instructing a mobile object with wireless connectivity, the mobile object being controllable in an autonomous or partially-autonomous mode by an on-board control device; the apparatus comprising: a first computing apparatus comprising a memory and a processor, the memory storing processing instructions which, when executed by the processor, cause the processor to perform a process including: maintaining a four-dimensional map of a physical region of interest over a timeframe of interest, the map including static and dynamic map objects representing corresponding static and dynamic physical objects within the physical region, one of the dynamic map objects representing the mobile object, the four dimensions being three spatial dimensions and time, and the timeframe including a future period, being a defined duration into the future beyond the present; the four-dimensional map coordinates of each dynamic map object being based on realtime sensor data from the physical region indicating the location of the corresponding dynamic physical object, and a predicted path of the dynamic map object in the future period; an on-board control device, the on-board control device comprising an on-board control device memory and an on-board control device processor, the on-board control device memory storing processing instructions which, when executed by the on-board control device processor, cause the on-board control device processor to perform a process including: using the four-dimensional map to determine a motion path for the mobile object in the future period that solves an objective function with one or more factors dependent upon the motion path of the mobile object; and instructing the mobile object to follow the determined motion path.

Embodiments of another aspect include an apparatus for instructing a motion path of a mobile object with wireless connectivity, the mobile object being controllable in an autonomous or partially-autonomous mode by an on-board control device; the apparatus comprising: a first computing apparatus comprising a memory and a processor, the memory storing processing instructions which, when executed by the processor, cause the processor to perform a process including: maintaining a four-dimensional map of a physical region of interest over a timeframe of interest, the map including static and dynamic map objects representing corresponding static and dynamic physical objects within the physical region, one of the dynamic map objects representing the mobile object, the four dimensions being three spatial dimensions and time, and the timeframe including a future period, being a defined duration into the future beyond the present; the four-dimensional map coordinates of each dynamic map object being based on realtime sensor data from the physical region indicating the location of the corresponding dynamic physical object, and a predicted path of the dynamic map object in the future period; using the four-dimensional map to determine a motion path for the mobile object in the future period that solves an objective function with one or more factors dependent upon the motion path of the mobile object; and instructing the mobile object to follow the determined motion path.

Embodiments of another aspect include a computer program for executing a method of an embodiment.

Embodiments include a method of instructing a motion path of a vehicle, the vehicle being driven in an autonomous or partially-autonomous mode by a vehicle control device; the method comprising: at a first computing apparatus, maintaining a four-dimensional map of a physical region of interest over a timeframe of interest, the map including static and dynamic map objects representing corresponding static and dynamic physical objects within the physical region, one of the dynamic map objects representing the vehicle, the four dimensions being three spatial dimensions and time, and the timeframe including a future period, being a defined duration into the future beyond the present; the four-dimensional map coordinates of each dynamic map object being based on realtime sensor data from the physical region indicating the location of the corresponding dynamic physical object, and a predicted path of the dynamic map object in the future period; responding to a map event during the future period, the map event being a spatial interaction between the dynamic map object representing the vehicle and another static or dynamic map object, by instructing the vehicle control device to assume a motion path that will avoid the spatial interaction.

Optionally, in embodiments configured to avoid spatial interaction, as outlines in the above statement, the predicted path of each dynamic map object comprises a predicted three-spatial-dimension map coordinate at each of a plurality of timesteps during the future period.

Advantageously, embodiments maintain a four-dimensional map, which predicts object locations into the future, to predict spatial interactions between objects, and instruct an autonomous vehicle to avoid involvement in said spatial interactions. Embodiments compute a four-dimensional dynamic map of objects in a physical region of interest. Predicted paths for dynamic objects predict the trajectory of the objects which allows the likelihood of an object to arrive at a specific location at a specific time to be mapped. Embodiments enable a system where the locations of multiple static and dynamic objects (both vehicle and non-vehicle) along with their behaviours are predicted and tracked in a map to form a four-dimensional map. Embodiments continuously update the four-dimensional map using real-time sensor data.

Embodiments of another aspect include: A system for instructing a motion path of a vehicle, the vehicle being driven in an autonomous or partially-autonomous mode by a vehicle control device; the apparatus comprising: a first computing apparatus comprising a memory and a processor, the memory storing processing instructions which, when executed by the processor, cause the processor to perform a process including: maintaining a four-dimensional map of a physical region of interest over a timeframe of interest, the map including static and dynamic map objects representing corresponding static and dynamic physical objects within the physical region, one of the dynamic map objects representing the vehicle, the four dimensions being three spatial dimensions and time, and the timeframe including a future period, being a defined duration into the future beyond the present; the four-dimensional map coordinates of each dynamic map object being based on realtime sensor data from the physical region indicating the location of the corresponding dynamic physical object, and a predicted path of the dynamic map object in the future period; a vehicle control device, the vehicle control device comprising a memory and a processor, the memory storing processing instructions which, when executed by the processor, cause the processor to perform a process including: responding to a map event during the future period, the map event being a spatial interaction between the dynamic map object representing the vehicle and another static or dynamic map object, by instructing the vehicle control device to assume a motion path that will avoid the spatial interaction.

Embodiments of another aspect include: An apparatus for instructing a motion path of a vehicle, the vehicle being driven in an autonomous or partially-autonomous mode by a vehicle control device; the apparatus comprising: a first computing apparatus comprising a memory and a processor, the memory storing processing instructions which, when executed by the processor, cause the processor to perform a process including: maintaining a four-dimensional map of a physical region of interest over a timeframe of interest, the map including static and dynamic map objects representing corresponding static and dynamic physical objects within the physical region, one of the dynamic map objects representing the vehicle, the four dimensions being three spatial dimensions and time, and the timeframe including a future period, being a defined duration into the future beyond the present; the four-dimensional map coordinates of each dynamic map object being based on realtime sensor data from the physical region indicating the location of the corresponding dynamic physical object, and a predicted path of the dynamic map object in the future period; responding to a map event during the future period, the map event being a spatial interaction between the dynamic map object representing the vehicle and another static or dynamic map object, by instructing the vehicle control device to assume a motion path that will avoid the spatial interaction.

Features of embodiments will now be described, by way of example, in the accompanying drawings, in which:
Figure 1 illustrates a method of an embodiment;
Figure 2 illustrates a hardware configuration of an embodiment;
Figure 3 illustrates an embodiment;
Figure 4 illustrates a vehicle control device in an embodiment;
Figure 5 illustrates a network architecture of an embodiment;
Figure 6 illustrates a flow of data in an embodiment;
Figure 7 illustrates a flow of functions performed in an exemplary process of maintaining a map;
Figure 8 illustrates a flow of functions performed in an exemplary process of predicting spatial interactions between map objects;
Figure 9 illustrates an implementation scenario;
Figure 10 illustrates some of the data computed and maintained by the software of the first computing apparatus;
Figure 11 illustrates data processed by an object contact predictor of a vehicle at time t1;
Figure 12 illustrates the role of the object contact predictor in predicting coexistence of a subject vehicle with various dynamic objects;
Figure 13 illustrates an embodiment implemented in a route optimisation task; and
Figure 14 illustrates a hardware arrangement of computing apparatus of an embodiment.

### DETAILED DESCRIPTION

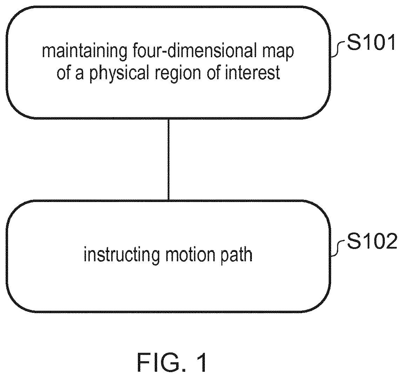

Figure 1 illustrates a method of an embodiment. The method comprises two steps, at S101, maintaining a four-dimensional map of a physical region of interest, and at S102, responding to a map event by instructing a motion path. The method is a method of instructing a motion path of a smart object, the smart object being driven in an autonomous or partially-autonomous mode by an on-board control device. The vehicle may be a self-driving vehicle.

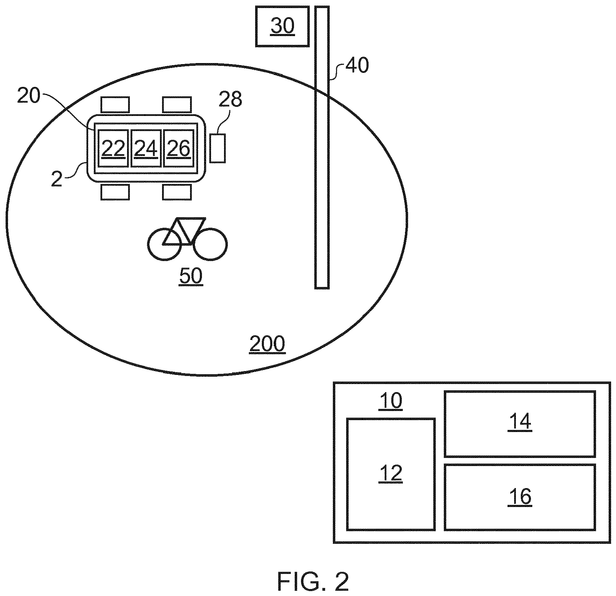

Figure 2 illustrates a hardware configuration of an embodiment. The embodiment includes a first computing apparatus 10 comprises a first computing apparatus processor 12, a first computing apparatus memory 14, and a first communication apparatus communication interface 16. The remaining hardware may form part of the embodiment, or may be hardware separate from the embodiment but communicatively coupled to one or more entities included in the embodiment. The remaining hardware includes a smart object2, such as a vehicle, which is drivable in an autonomous or partially-autonomous mode by a control device 20. The on-board control device 20 includes an on-board control device processor 22, an on-board control device memory 24, and an on-board control device communication interface 26. One or more sensors 28 may be mounted on the mobile object 2, providing realtime sensor data representing locations of objects within the physical region of interest 200 to the first communications apparatus 10 via the communication interface 26 and the first computing apparatus communication interface 16. The mounted sensor 28 may be a LIDAR, a RADAR, or a camera.

The physical region 200 may be observed by a stationary sensor 30, which may be part of an embodiment, or may be external to the embodiment but communicatively coupled to a first computing apparatus 10 of an embodiment. The stationary sensor 30 is configured to provide realtime sensor data representing locations of objects in the physical region of interest 200 to the first computing apparatus 10. The stationary sensor 30 may be, for example, a LIDAR, a RADAR, or a camera. The stationary sensor 30 may be fixed to a building, or mounted on, for example, a pole 40. The pole is exemplary of a stationary physical object 40 within the physical region of interest. It is noted that the stationary sensor 30 need not be located in the physical region of interest, as long as it takes readings therefrom. The physical region of interest 200 is also occupied by a dynamic physical object 50, for example, a cyclist riding a bicycle.

Step S101 is performed by the first computing apparatus 10. S101 is a maintaining step, therefore it is to be understood that it is performed continuously rather than as a discrete step, and therefore S102 is performed contemporaneously with S101.

S101 comprises, at a first computing apparatus 10, maintaining a four-dimensional map of a physical region of interest 200 over a timeframe of interest, the map including static and dynamic map objects representing corresponding static 40 and dynamic 50 physical objects within the physical region 200, one of the dynamic map objects representing the mobile object 2, the four dimensions being three spatial dimensions and time, and the timeframe including a future period, being a defined duration into the future beyond the present. The map locations of each dynamic map object being based on realtime sensor data from the physical region 200 indicating the location of the corresponding dynamic physical object, and a predicted path of the dynamic map object in the future period.

The first computing apparatus 10 may be a cloud server, a fog server, or an edge server. The first computing apparatus 10 may be a plurality of interconnected servers, said servers being either cloud servers, fog servers, or edge servers. The first computing apparatus 10 may be a server at the edge of a network. For example, the first computing apparatus 10 may be between a Smart Connected Thing (SCoT) and a cloud server in the network hierarchy. The first computing apparatus 10 may be between realtime sensors, mounted on vehicles and on stationary objects in the physical region of interest, and centralised network entities such as cloud servers. Such realtime sensors provide realtime sensor data forming the basis of the four-dimensional map. The first computing apparatus 10 may be in data communication with the realtime sensors and/or the on-board control devices on a one-hop, two-hop, or three-hop data communication pathway.

The first computing apparatus 10 may receive realtime sensor data relating to the physical region of interest 200 in the uplink direction. The sensors generating the realtime sensor data from the physical region 200, upon which the map is based, may have a data connection to the first communication apparatus 10 that features only uplink data connections, for example, to the first computing apparatus communication interface 16. The first communication apparatus 10 may have a data connection to the on-board control device 20 that features only downlink data connections. The first computing apparatus 10 has a low-latency connection to the sensors and the on-board control device 20. The first computing apparatus may perform step S101, and optionally also step S102, in the absence of data from higher nodes in a network hierarchy.

The mobile object 2 has wireless connectivity. The mobile object 2 may be configured to make decisions regarding a motion path of the mobile object based on sensor data, from on-board sensors and optionally also from other sensors feeding sensor data to a computing apparatus, network, or server, to which the mobile object 2 is connected. The mobile object 2 may be a vehicle, and may in particular be a motor vehicle. The vehicle 2 may be a car, truck, lorry, or van. The vehicle 2 may be a boat. The vehicle 2 may be an airborne vehicle. The vehicle 2 is operable in an autonomous or partially-autonomous mode by an on-board control device 20. Operable in this context is taken to mean motion-controllable, so that in an autonomous mode the on-board control device 20 is responsible for controlling speed and direction of motion of the vehicle 2 (noting that manual override may be permissible), and in a partially-autonomous mode the on-board control device 20 may control speed and direction of motion of the vehicle 2 in particular circumstances, such as when an instruction is received (from an authorised entity).

The on-board control device 20 is configured to control (speed and direction of) motion of the vehicle 2, and to communicate with entities including at least the first computing apparatus 10 via the on-board control device communication interface 26. The on-board control device 20 is configured to implement instructions received from authorised entities. It is assumed in embodiments that the first computing apparatus 10 is authorised to instruct the on-board control device 20.

The first computing apparatus 10 maintains a map of a physical region 200. The map is stored on the first computing apparatus memory 14, and map update and other associated processing is performed by the first computing apparatus processor 12. A map excerpt may be stored by the on-board control device memory 24. The map is a four-dimensional map of the physical region 200. The physical region 200 is denoted a "region of interest" to indicate that it is a particular physical region 200 that is defined for the first computing apparatus 10, for example, by an administrator, and is not an arbitrary region. The region of interest 200 may be a physical region in which autonomous vehicles travel. In another example, the region of interest 200 may be an intersection of potential routes followed by vehicles, so that some collision avoidance mechanism is favourable.

The physical region of interest 200 is occupied by static physical objects 40 and dynamic physical objects 50. Static physical objects 40 are those objects occupying the region of interest and whose position has been permanent over a timeframe that is longer than the defined future period of the map. Static physical objects 40 may actually have a position that has been permanent for a much longer timeframe than the defined future period of the map. Dynamic physical objects 50 are physical objects whose position changes over time. Dynamic physical objects 50 include those objects which, though presently static, are known to be mobile, such as people or vehicles. The map includes static and dynamic map objects representing corresponding static 40 and dynamic physical objects 50 within the physical region 200. A distinction is made in the terminology between dynamic physical objects, which exist in the physical domain, and dynamic map objects, which represent corresponding dynamic physical objects and exist in the map domain. Likewise, static physical objects and static map objects. It is noted that an object in the map may be recorded and processed as a static map object until it is first observed to move by sensors providing realtime sensor data. Once it is observed to move, the object is labelled in the map as a dynamic map object and is processed accordingly.

One of the dynamic map objects represents the mobile object 2, that is, the mobile object 2 that is instructed in step S102. The mobile object 2 may be a vehicle, and may be termed, for example, the controllable vehicle, the instructable vehicle, or the subject vehicle.

The map is a four-dimensional map, the four dimensions being three spatial dimensions and time, so that the map represents movement. The map may be configured by dividing a mapped period of time (such as the future period) into timesteps, and representing a position and location of mapped objects at each timestep. The timesteps need not be equal. For example, it may be that timesteps are shorter between a current time and a first time into the future, and lengthen thereafter. In that way, more processing and memory resources are dedicated to immediate risks. Each timestep may be referred to as a map instant, being an instant in time that is represented in the map. For example, if the map is coordinate-based, time steps and map instants are values that may be assumed by the coordinate representing time.

The four-dimensional map coordinates of each dynamic map object are based on realtime sensor data from the physical region 200 indicating the location of the corresponding dynamic physical object, and a predicted path of the dynamic map object in the future period. The predicted path of each dynamic map object comprises a predicted three-spatial-dimension map coordinate at each of a plurality of timesteps during the future period. Each dynamic map object has a three-dimensional spatial coordinate at each map instant at which the dynamic map object is present in the map. The timeframe represented by the map comprises a future period, being a defined duration into the future beyond the present. The defined period may be predefined by a system administrator, or may be deterministic according to processing and memory availability. The timeframe represented by the map is such that a map instant exists which represents the present time, wherein the positions of dynamic map objects at the present time are based on realtime sensor readings taken either at the present time, or at an earlier time and used as the basis for a predicted path of the dynamic map object over a timeframe including the present time. Such predicted paths may be modified in accordance with updated realtime sensor readings. The map locations of each dynamic map object may be based on realtime sensor data from the physical region indicating the location of the corresponding dynamic physical objected, and a predicted path of the dynamic map object in the future period. The predicted path may be computed by the first computing apparatus 10, or, in the case of dynamic map objects representing autonomous or partially-autonomous vehicles, may be computed by the on-board control devices 20 of said vehicles 2, and communicated to the first computing apparatus 10 over an uplink data connection. For one or more dynamic map objects representing vehicles being driven in an autonomous or partially autonomous mode by a respective vehicle control device, the predicted path of the vehicle is computed by the on-board control device and transmitted to the first computing apparatus for mapping.

An example of step S102 in a particular embodiment relating to collision avoidance will now be described. At step S102, a map event during the future period, i.e. a predicted map event, is responded to by instructing the mobile object 2 to assume a motion path that will avoid the map event. In the particular embodiment, step S102 comprises responding to a map event during the future period, the map event being a spatial interaction between the dynamic map object representing the vehicle and another static or dynamic map object, by instructing the vehicle control device to assume a motion path that will avoid the spatial interaction.

Step S102 comprises instructing the mobile object 2 to take a particular motion path, or to take a motion path fitting certain specified spatial and temporal constraints. Step S102 may comprise using the four-dimensional map to determine a motion path for the mobile object in the future period that solves an objective function with one or more factors dependent upon the motion path of the mobile object; and instructing the mobile object to follow the determined motion path. Step S102 may be performed by the first computing apparatus 10, by the on-board control device 20, or it may be performed by a computing apparatus borne by the mobile object and communicatively coupled to the on-board control device 20, which computing apparatus borne by the mobile object and communicatively coupled to the on-board control device 20 is taken in this disclosure to be a component of the on-board control device 20. The instruction may be provided to the algorithm, algorithms, or software, operable to drive the vehicle.

The objective function may be multi-factorial. Solving the objective function may be minimising, maximising, or achieving a target value. Solving the objective function may be minimising, maximising, or achieving a target value, whilst adhering to one or more specified constraints or criterion. The objective function may be, for example, maximising ride-sharing opportunities, reaching a specified destination without allowing a battery charge level to drop to zero, or to drop below a threshold, say, 10%. The objective function may relate to a population of objects in the physical region of interest, so that solving the objective function includes determining and instructing motion paths for plural mobile objects, of which the subject mobile object 2 is one. The objective function may be minimising distance travelled to reach a specified destination, or may be reaching a specified destination, or one of a plurality of specified destinations, within a specified time constraint. The four-dimensional map models objects in the physical domain into the future, which enables prediction of whether different motion paths for the mobile object will solve the objective function, and hence to determine a motion path for the mobile object. The objective function may be avoiding spatial interactions with other objects, wherein a spatial interaction is a distance between the two objects being reduced to within a defined limit.

An entity performing S102 issues an instruction to the vehicle control device to assume a motion path that will solve the objective function. The instruction may include an indication of a motion path that the on-board control device 20 is to follow in order to solve the objective function. Alternatively, the instruction may indicate one or more constraints for the motion path, such as a three-dimensional (or four-dimensional) coordinate to be avoided or to be included, in the motion path of the vehicle. The specified constraint may be a destination or series of destinations.

The on-board control device 20 may be configured to respond to the instruction by formulating, via whichever algorithm or algorithms control the motion path of the vehicle, a motion path which will solve the objective function by following the specified constraints, or, by assuming a motion path included in the instruction, formulated by the instructing entity.

In embodiments, each dynamic map object may have a point specific dynamic time of arrival for times between a present time and the end of a future period. In other words, a predicted path of locations at time instants between a present time and the end of a future period. The subject mobile object may predict its own predicted path (i.e. via the control or driving algorithm). For example, one or more mobile object may be an autonomous vehicle. Each autonomous vehicle has a communication connection to networked servers, which may be in the cloud or in the fog (i.e. close to the edge of the network). Each autonomous vehicle sends its own predicted path to the networked servers. By using the dynamic map, the networked servers predict the locations of all map objects at any mapped instant (i.e. any mapped timestep between a present time and the end of the future period).

An example of step S102 in a particular embodiment relating to collision avoidance in self-driving or autonomous vehicles will now be described. In the example, the mobile object is an autonomous or semi-autonomous vehicle, and the on-board control device 20 is a vehicle control device. At step S102, a map event during the future period, i.e. a predicted map event, is responded to by instructing the vehicle 2 to assume a motion path that will avoid the map event. In the particular embodiment, step S102 comprises responding to a map event during the future period, the map event being a spatial interaction between the dynamic map object representing the vehicle and another static or dynamic map object, by instructing the vehicle control device to assume a motion path that will avoid the spatial interaction.

Step S102 may be performed by the first computing apparatus 10, by the vehicle control device, or it may be performed by a computing apparatus borne by the vehicle and communicatively coupled to the vehicle control device 20, which computing apparatus borne by the vehicle and communicatively coupled to the vehicle control device is taken in this disclosure to be a component of the vehicle control device 20. The instruction may be provided to the algorithm, algorithms, or software, operable to drive the vehicle. The spatial interaction is at a map instant during the future period represented by the map, and is therefore a prediction. The spatial interaction is not necessarily a contact between two map objects, but may be a reduction in distance between the two map objects to a distance that is within a spatial interaction threshold. Spatial interaction threshold may be a single fixed value, or may be configurable according to historical information representing the vehicle or a driver of the vehicle. Similarly, spatial interaction may be configurable for spatial interactions involving the subject vehicle depending on the type of map object with which the spatial interaction occurs. For example, the map objects may be labelled by an object recognition algorithm operating on the realtime sensor data, so that, for example, pedestrians, cyclists, boats, cars, motorcyclists, walls, animals, are distinguished from one another in the data forming the map, enabling differentiation in the spatial interaction threshold (i.e. the distance between two objects below which a spatial interaction is registered).

The spatial interaction may be an indication that a route being taken by the vehicle will be subject to a delay, represented in the map by the presence of one or more map objects on or around the route.

An entity performing S102 issues an instruction to the vehicle control device to assume a motion path that will avoid the spatial interaction. The instruction may include an indication of a motion path that the vehicle control device 20 is to follow in order to avoid the predicted spatial interaction. Alternatively, the instruction may indicate the location of the spatial interaction as a three-dimensional waypoint to be avoided in formulating the motion path of the vehicle. Alternatively, the instruction may indicate the time and location of the spatial interaction as a four-dimensional waypoint to be avoided in formulating the motion path of the vehicle 2. Alternatively, the instruction may identify a present location of the object represented by the map object with which the spatial interaction is predicted to occur, so that said object can be identified by the vehicle control device 20 and the motion path of the vehicle 2 adapted to take into account said object in accordance with the algorithm controlling the motion path of the vehicle 2. Alternatively, the instruction may identify the object represented by the map object with which the spatial interaction is predicted to occur, so that said object can be identified by the vehicle control device 20 and the motion path of the vehicle 2 adapted to take into account said object in accordance with the algorithm controlling the motion path of the vehicle 2. The above alternatives are not mutually exclusive, and an instruction may aggregate more than one of the above alternative instructions.

The vehicle control device 20 may be configured to respond to the instruction by formulating, via whichever algorithm or algorithms control the motion path of the vehicle, a motion path which will avoid the predicted spatial interaction, or, by assuming a motion path included in the instruction, formulated by the instructing entity to avoid the spatial interaction.

In embodiments, each autonomous vehicle may have a point specific dynamic time of arrival for times between a present time and the end of a future period. In other words, a predicted path of locations at time instants between a present time and the end of a future period. The autonomous vehicle may predict its own predicted path (i.e. via the control or driving algorithm). Each autonomous vehicle has a communication connection to networked servers, which may be in the cloud or in the fog (i.e. close to the edge of the network). Each autonomous vehicle sends its own predicted path to the networked servers. By using the dynamic map, the networked servers find all objects within a threshold distance of the subject vehicle at any mapped instant (i.e. any mapped timestep between a present time and the end of the future period). The networked servers send to the subject vehicle the predicted paths of all objects within the threshold distance of the subject vehicle at any mapped instant. Each autonomous vehicle has computing hardware running software for using the received predicted paths and the predicted paths of the subject vehicle to predict potential collisions, and to instruct the driving algorithm to adopt a motion path which avoids potential collisions. The process is repetitive.

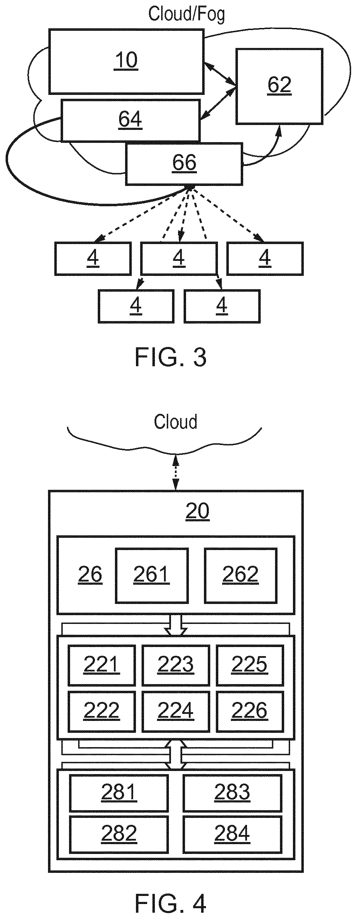

Figure 3 illustrates an embodiment. In the example of Figure 3, a plurality of Smart Connected Things (SCoT) 4 are connected to the first computing apparatus 10, which is one or more servers in the cloud or fog. An SCoT is an object with connectivity allowing data to be exchanged with computing apparatus, for example, the first computing apparatus 10, as part of a computing network. An SCoT may be embedded with one or more from among processors, sensors, and software. Examples of SCoTs include the mobile object or vehicle 2 (either as a collective set of components, or individual components thereof such as the object-mounted sensor 28 or the on-board control device 20), the static sensor 30. Nonetheless, an SCoT may also be but is not limited to a drone, a maritime vessel, or delivery robot. The computing network includes the first computing apparatus 10, and also includes optional computing functional modules the collective knowledge optimizer 62, the data triage 64, and the triangulator 66. In any of the examples provided, the mobile object may be miniaturised, or any available size.

The data triage 64 filters the realtime sensor data before it reaches the first computing apparatus 10 for mapping, for example, by removing duplicate data entries. The triangulator 66 operates in collaboration with the collective knowledge optimizer 62 to identify gaps, for example, blind spots, in realtime sensor data from a vehicle 2, and to fill those gaps with data from sensors such as stationary sensors or sensors from other vehicles, the data filling the gap may be communicated to the first computing apparatus 10 for mapping and/or to the vehicle 2 (or its on-board computing device 20). The collective knowledge optimizer 62 is configured to access information such as predicted paths of mapped objects, and to provide said information to the first computing apparatus 10 for mapping.

The first computing apparatus 10 uses the realtime sensor information from the ScOTs 4, and knowledge from other sources, to generate and maintain a four-dimensional dynamic and interactive map of the physical region of interest 200 including predicted paths (i.e. trajectories) of dynamic objects, into the future. The four dimensions are three spatial dimensions, and the fourth dimension is time. The fourth dimension endows the map with predictability into the future. Dynamic interaction of various dynamic (i.e. moving) objects is captured in the 4d predicted paths of the dynamic map objects. The map may compute the real-time 4-dimensional dynamic map for all dynamic objects within the physical region of interest 200 by predicting the location (in spatial coordinates) of every moving object within a specified timeframe.

Figure 4 illustrates an example of an on-board control device 20 included as part of an embodiment. The sensors 281 to 284 are exemplary of the object-mounted sensors described elsewhere in this document, and may include one or more from among: a LIDAR 281, a RADAR 282, camera 283, and any other sensor providing information indicating the location and/or position of the mobile object 2 or any other object within the physical region of interest 200.

The on-board computing device memory 24 stores instructions which, when processed by the on-board computing device processor 22, causes the on-board computing device processor 22 to implement one or more from among the following exemplary artificial intelligence functions: an object contact predictor 221, a location identifier 222, an object recognition function 223, a swarm intelligence function 224, a motion path identifier 225, and a controller 226. The on-board computing device communication interface 26 may be configured to operate as two functional modules, a knowledge augmenter 261, and a knowledge exchanger 262.

The sensors 281 to 284, and the associated processing functions 221 to 226, analyse the measured sensor data to infer motion of dynamic physical objects (via the motion path identifier 225), location of physical objects (via the location identifier), and classification of objects (via the object recognition function 225), and to use the inferred information in the controller 226.

The object contact predictor 221 models and predicts the co-existence of multiple objects at the same geo-location (spatial coordinates) at a point. The time and location at which the vehicle 2 will be, and thus at which co-existence of multiple objects is to be predicted, may be computed by the on-board computing device 20 itself or in collaboration with the first computing apparatus 10. Predicted co-existence is exemplary of a spatial interaction, which triggers an instruction to the controller 226 to assume a motion path that will avoid the spatial interaction.

The on-board control device 20 is exemplary of a second computing apparatus, borne by the vehicle. Such a vehicle control device 20 may be configured to periodically querying the first computing apparatus; and in response to the query to receive a query response including the predicted path, or a portion thereof, of any dynamic map object having a current position, or predicted path, indicating a distance from the vehicle 2 is or will be within a distance defined by a distance threshold, at any time before a time into the future defined by a temporal threshold. The on-board control device 20, for example, at the object contact predictor 221, is configured to use the predicted path of the vehicle 2 and the predicted paths of the dynamic map objects in the query response to identify, as a spatial interaction, any dynamic map object having a predicted path contemporaneously within a defined contact threshold distance of the predicted path of the vehicle 2. For example, the query response is generated on behalf of the vehicle by the data triage 64 and/or the collective knowledge optimizer 62.

In other words, the object contact predictor 221 takes customised information from the fog or cloud (i.e. the query response) and uses it to compute a risk of co-existing with other objects in the future. This information is conveyed to the controller as an instruction to avoid such co-existence, and hence optimises the manoeuvring of the vehicle 2 in such a way that collision is avoided, and furthermore may also avoid abrupt acceleration, deceleration, or steering.

Optionally, the object contact predictor 221, or the data triage 64 and collective knowledge optimizer 62, use historical knowledge relating to the subject vehicle 2, and/or its driver, to determine a spatial radius of interest within which the object contact predictor 221 is notified of the presence of objects for processing (and contact avoidance). In other words, the query and the response to the query is tailored to the subject vehicle 2. For instance, assuming that other parameters are identical, the prediction requirements for a vehicle such as a speed-restricted mobility device are largely different than those for a sports car.

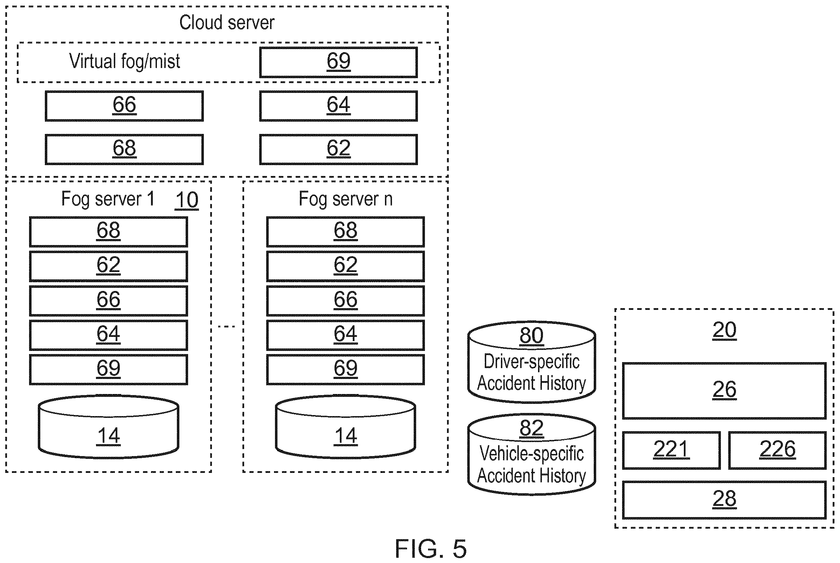

Figure 5 illustrates a network architecture of an embodiment. As illustrated in Figure 5, intelligence from various connected objects is orchestrated between centralised and distributed computing intelligence resulting in swarm wisdom. The illustrated network computes a real-time 4D dynamic map for all moving objects based on their point-specific dynamic time of arrival, stored as a map 68 by the fog servers 10 and optionally also by the cloud server 100. An object contact predictor 221 predicts the co-existence of multiple objects at the same geo-location (x,y-coordinate) at a point in real-time. Embodiments provide a mechanism for tracking predicted trajectories of multiple static and dynamic objects (both vehicles and non-vehicles) and their behaviours are predicted and tracked. The intelligence of SCoTs is augmented by the functionality of the embodiment. Embodiments may utilise data sources including contextual metaheuristics, drone/street cameras, satellite images, and collision history, to control and optimise the mobility of various autonomous and partially-autonomous vehicles.

The network includes a cloud server 100 which is above the first computing apparatus 10 in the network architecture. The cloud server 100 is shown as a single server, but may be a plurality of interconnected cloud servers. By way of example, functions that may be provided by the cloud server are illustrated, noting that such functions are provided by memory and processor hardware of the cloud server, and that said functions may be realised in collaboration with one or more fog servers 10 exemplary of the first computing apparatus 10. Said functions include a path predictor 69, a triangulator 66, a data triage 64, a map 68, and a collective knowledge optimizer 62. It is noted that the map maintained by the cloud server 100 may be, for example, an aggregation of maps maintained by plural fog servers 10, and may cover a time period into the future that is longer than the future period represented by the maps maintained by the individual fog servers 10.

Two fog servers 10 are illustrated. The fog servers 10 are exemplary of the first computing apparatus. By fog server, it is taken to mean a server that is between the cloud server 100 and the edge devices (SCoTs) in the network hierarchy. Therefore, latency between edge devices and the fog servers 10 is smaller than between edge devices and cloud servers 100. Two fog servers are illustrated, but there may be a plurality of fog servers in the network. Each fog server may be responsible for maintaining a map of a particular physical region of interest 200, or plural fog servers 10 may collaborate to maintain a map of a physical region of interest 200. The physical regions of interest 200 mapped by different fog servers 10 may overlap. Fog servers 10 have processor hardware 12, memory hardware 14, and a communication interface 16. Exemplary functional modules of the fog servers 10 are illustrated in Figure 5, by way of example. The fog servers 10 are configured to maintain a four dimensional map 68 of a physical region of interest 200 over a time period including a future period. A collective knowledge optimiser 62 is configured to consolidate data exchanged with other entities. A triangulator 66 is configured to augment data from a particular vehicle 2 with data from sensors other than those mounted on the vehicle in order to fill in gaps in data from the particular vehicle 2. The data triage 64 is configured to filter data exchanged with vehicle control devices 20 in order to facilitate low latency by optimising bandwidth use. A path predictor 69 uses artificial intelligence to predict motion paths of dynamic map objects. The first computing apparatus memory 14 may include a data store for information such as data from environmental sources, relating to historical information about events in or around the physical region of interest, and schedules for future events. Such data may include weather forecasts.

Data may be stored external to the first computing apparatus 10 but accessible thereby. For example, a driver-specific data store 80 may store information about historical collisions in which the driver of the subject vehicle 2 has been involved. For example, in a partially autonomous driving mode, such information may be used to determine a spatial radius of interest within which the object contact predictor 221 is notified of the presence of objects for processing (and contact avoidance) by the map 68 (and via the knowledge triage 64).

The on-board computing device 20 is illustrated. The on-board computing device 20 is an example of an SCoT in the computing network. Other SCoTs include, for example, sensors, and optionally also infrastructure such as traffic lights. The on-board computing device 20 is exemplary of the vehicle computing devices discussed elsewhere in this document. The on-board computing device 20 is illustrated with components including a communication interface 26, an object contact predictor 221, a controller 226, and one or more sensors 28. It is noted that the one or more sensors may be connected to the network as part of the on-board computing device 20, or independently thereof. The on-board computing device 20 may include further hardware and software components, such as those illustrated in Figure 4.

The object contact predictor 221 receives query response from one or more of the fog servers 10, including predicted paths of all map objects that are within a spatial radius of interest of the subject vehicle 2, or will be within said radius at some map instant during a future time period of interest (i.e. between a current time and a threshold time into the future) based on predicted paths. It is noted that, in all embodiments, the query and response occurs more or less continuously (i.e. once per time step) while the vehicle is being driven in autonomous or partially autonomous mode, so that the information with which the object contact predictor 221 is operating is being repeatedly updated. The query response is used by the object contact predictor 221 to predict when the subject vehicle 2 will pass within a distance of another object that is within a contact threshold (i.e. deemed to represent a sufficient risk of contact to notify the controller 226), and the controller 226 is instructed to avoid the predicted contact threshold violation, either by notifying the controller 226 of spatial coordinates to avoid, by notifying the controller 226 of combined time and spatial coordinates to avoid, by notifying the controller 226 of a particular path to avoid, by notifying the controller 226 of a particular path to take, or by notifying the controller 226 of a particular object to avoid.

The network may also include edge devices (which may be SCoTs) including drones, CCTV, planes, traffic lights, phones with GPS, smart gates, personal identification systems, among others.

Swarm wisdom is realised by the cooperation of on-board control device 20 and other SCoTs (including other on-board control devices 20) with a first computing apparatus 10, and optionally also cloud computing hardware. Each SCoT is an independent agent that tends toward optimal decision making when operating as a member of a group. To this end, collective decision making for plural on-board control devices 20 is enabled by processing data from multiple vehicle control devices 20, and optionally other SCoTs, in a fog server 10. Object path predictor 69 is an artificial intelligence software function implemented on the hardware of the first computing apparatus 10 by extracting mobility patterns of objects from data obtained by the first computing apparatus 10 over a period of operation. The path predictions so obtained are used in maintaining the four-dimensional map that is used to create swarm wisdom for the on-board control devices 20. Swarm wisdom provides omniscient knowledge to any connected smart device (i.e. SCoT such as on-board control device 20). Physical regions of interest 200 that do not have a fog server 10 may utilise a cloud server 100 as a first computing apparatus 10, that is, may have network architectures without fog servers. In such implementations, a virtual fog, or mist, is created in the cloud server to collect, store, and process the pertinent data.

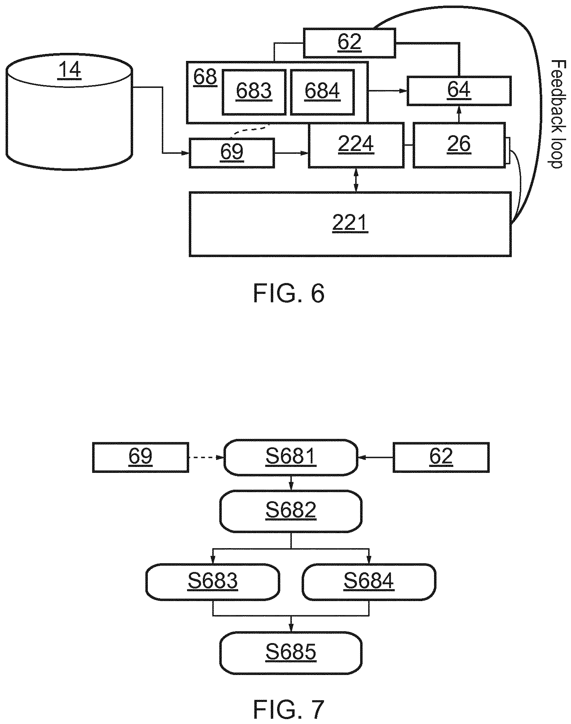

Figure 6 illustrates a flow of data in an embodiment. Information from diverse sources, including object-mounted sensors 28 and optionally also stationary sensors 30, is optimised and stored as collective knowledge 62. Some of the data may be from databases of which relevant portions may be stored by the first computing apparatus memory 14, optionally following query accesses to data stores such as meteorological agencies, traffic agencies, etc. The collective knowledge optimizer 62 functions according to an objective, which, in embodiments, is maintenance of the four-dimensional map 68. The collective knowledge optimizer 62 obtains the information required for maintaining the map 68 from sensors and other SCoTs. Said information is utilised by the map 68 (i.e. by the software running on the first computing apparatus 10 functioning to maintain the map) to predict the location of all map objects over a future period represented by the map. Optionally, a path predictor artificial intelligence module 69 is fed information relating to a particular object or class of objects in order to predict a path for that object, which predicted path is mapped. The map 68 is filtered by the data triage 64 and an excerpt of the map data is transferred to the or each vehicle 2 being driven in autonomous or partially-autonomous mode. The map excerpt (which may be referred to as a query response) is transmitted to the on-board computing device 20 via the knowledge augmenter 262, which may add information from the vehicles own sensors or predicted path information from the controller 226. The vehicle computing device 20 passes the augmented information to the object contact predictor 221, which predicts contacts (or distances within a contact threshold) and notifies the controller 226. It is noted that the object contact predictor 221 is a software function, and may divide the contact predictions into immediate future (less than 1 second), near future (greater than 1 second and less than five seconds in the future), and beyond (more than five seconds in the future). Processing resources and other hardware bandwidth restrictions may be such that prioritisation is required, and the object contact predictor is configured to prioritise those divided contact prediction functions into order of immediacy.

Figure 7 illustrates a flow of functions performed in an exemplary process of maintaining the map 68. Information sources may include, for example, a path predictor 69 which may either notify the software maintaining the map of the predicted path for a particular object, or may notify constraints which can be used by the map in predicting a path for a particular object (i.e. in the location at which the object is located, objects of that type follow path X with a degree of confidence Y). A further information source is the collective knowledge 62 from the sensors observing the physical region of interest 200 (i.e. the mapped region). The mapping function 68 computes the real-time four-dimensional dynamic map of objects in the physical region by predicting the location of every moving object within a mapped timeframe (which is aggregated with existing information indicating location of static objects). At S681, the information from the collective knowledge optimiser 62 representing the current location of objects is plotted onto the map 68. The software tracks objects to monitor and record their historical path on the map, so that at S682 for each dynamic object a trajectory specific mean acceleration is computed, which may be utilised in predicting the time at which the object will arrive at different locations (i.e. path prediction). It is noted that locations are given by spatial coordinates, which may be three-dimensional, or may be two-dimensional if adherence to a surface can be assumed. However, of course, even if adhered to a surface, the space occupied by an object is three-dimensional, and so co-ordinates may be three-dimensional. It is noted that, whilst embodiments are discussed in terms of each object having a location at a time instant, embodiments do, in fact, track and predict three-dimensional space occupied by the object at each time instant. Location is a convenient conceptual basis to discuss the functionality of embodiments. At step S683 the path of the subject vehicle is predicted as point-specific dynamic times of arrival in map coordinates, i.e. which map coordinates will be occupied by the vehicle at which time. At step S684, the same prediction is made for dynamic map objects other than the vehicle. At step S685, the predicted paths are added to the map 68.

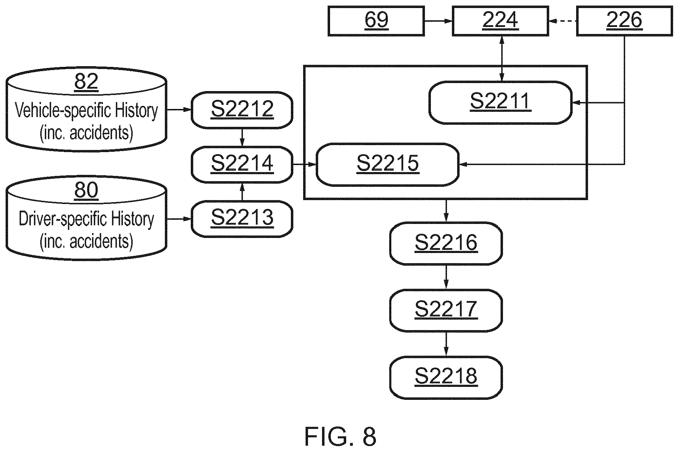

Figure 8 illustrates a flow of functions performed in an exemplary process of predicting spatial interactions between map objects. The object contact predictor 221 may be configured to perform one or more steps S2211 to S2218 illustrated in Figure 8. The object contact predictor 221 receives information from plural sources and therefore must perform some pre-processing to parse the information such that it is labelled and/or stored in the appropriate logical or physical data location for processing. The orchestration is performed by a software function running on the vehicle computing device 20, such as the swarm intelligence software 224, which, at S2211, receives and pre-processes information from the path predictor 69 and/or the map 68 via the knowledge augmenter 226.

S2212 to S2215 represent optional steps that may be carried out in order to incorporate information from external sources. Such external sources may be, for example, vehicle-specific historical information 82 and driver-specific historical information 80. Either or both sources may be leveraged. At S2212 a profile for the vehicle is generated from information stored in the vehicle-specific historical information store 82. An example of such information is recorded collisions involving the subject vehicle. At S2213 a profile for the driver is generated from information stored in the driver-specific historical information store 80. An example of such information is recorded collisions involving the subject driver. At SS214 the two profiles are correlated, for example, such correlation may include filtering from the vehicle profile any collisions not involving the present driver. The swarm intelligence function 224 may inform the object contact predictor 221 of parameters for motion of the subject vehicle with respect to other SCoTs, for example, minimum and maximum distances to/from other objects (which may be type-specific), maintaining a particular speed range and/or acceleration range. The swarm intelligence function may adapt said parameters based on factors including the particular physical region 200 in which the vehicle 2 is present, time of day, and, at SS2215, the correlated historical information relating to the vehicle and driver.

At SS216 the object contact predictor 221 predicts, based on the map, spatial interactions involving the subject vehicle that will occur, or are at risk of occurring, within the immediate future S2216, which may be the next 1 second, near future (greater than 1 second and less than five seconds in the future) S2217, and beyond (more than five seconds in the future) S2218.

The object contact predictor 221, at steps S2216 to S2218, predicts spatial interactions between the subject vehicle 2 and other objects based on spatial interaction between the dynamic object representing the vehicle and another of the static and dynamic map objects in the future period of the map (or the map excerpt obtained by the object contact predictor 221). A mapped spatial interaction is the contemporaneous three-spatial-dimension map coordinates of the two objects being within a defined contact threshold distance. The mapped spatial interaction (which is a prediction of a physical spatial interaction) may be identified by comparing the predicted path of the dynamic map object representing the vehicle with: the predicted paths of dynamic map objects having a current location within a first defined threshold distance of the current location of the dynamic map object representing the vehicle; and with the locations of static map objects within a second defined threshold distance of the current location of the dynamic map object representing the vehicle.

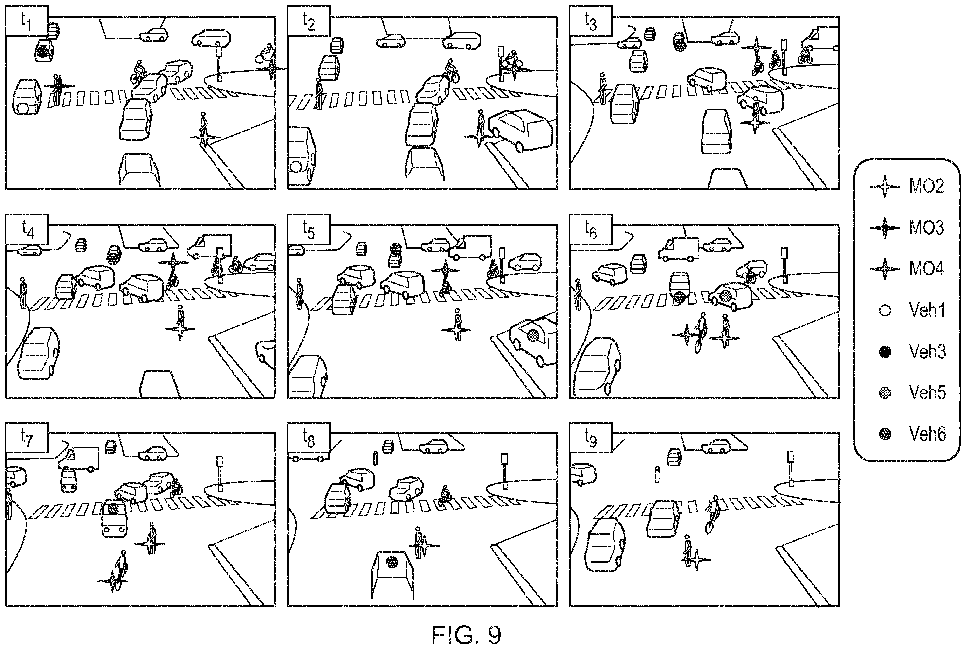

Figure 9 illustrates an implementation scenario in which coordination amongst connected objects allows for collision-free and efficient mobility at an intersection. The intersection is exemplary of a physical region of interest 200. The subject vehicle receives information from the map predicting paths of dynamic objects, hence enabling the controller 226 of the subject vehicle to manoeuvre the subject vehicle in a manner which avoids collision risks, and may also maintain smooth and uninterrupted motion. Figure 9 illustrates a view of a physical region of interest 200 such as may be observed by a static camera 30, providing sensor data for use in maintaining a map 68. Since the map 68 represents the physical region 200, the scenes in Figure 9 may also be representative of the map at nine temporal coordinates, t1 to t9. There are three dynamic objects, MO2, MO3, MO4, which are not part of the computing network, but are mapped. There are four vehicles, Veh1, Veh3, Veh5, and Veh6, any one, or any combination, of which may be an autonomous or partially-autonomous vehicle forming part of an embodiment or forming part of a network in which an embodiment is operational.

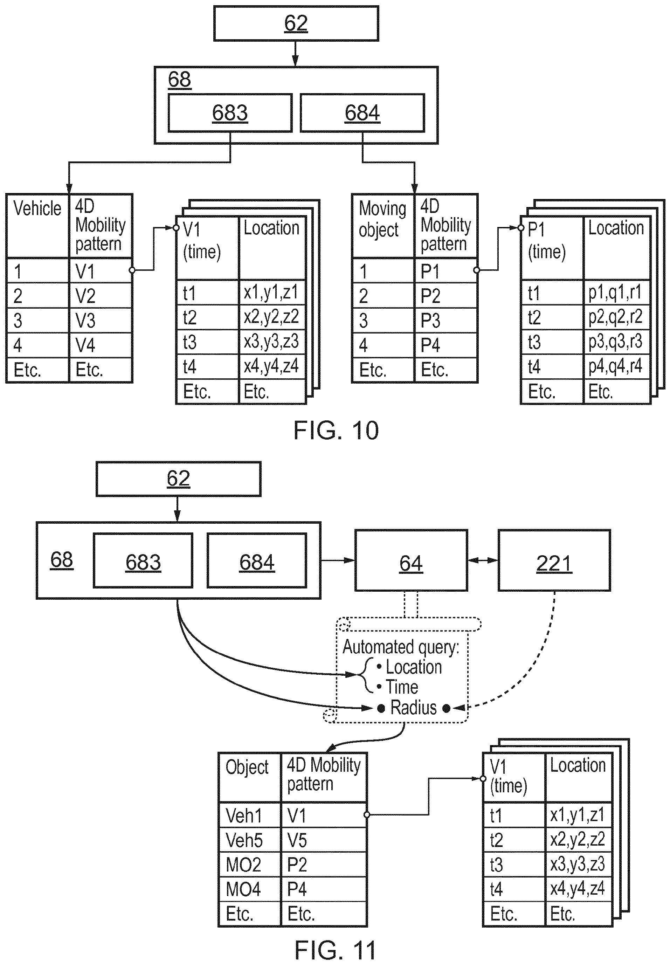

Figure 10 illustrates some of the data computed and maintained by the software of the first computing apparatus 10 responsible for maintaining the map. The collective knowledge 62 from the realtime sensors provides realtime data representing both dynamic vehicles and dynamic objects other than vehicles. Each dynamic map object representing a vehicle is assigned a predicted path (i.e. a 4D mobility pattern) by the particular software module for assigning point specific dynamic times of arrival to vehicles 683. Each dynamic map object representing a non-vehicle is assigned a predicted path (i.e. a 4D mobility pattern) by the particular software module for assigning point specific dynamic times of arrival to non-vehicles 684. Optionally, each predicted path is associated with a confidence level. As illustrated, each path comprises a spatial coordinate for each of a plurality of mapped instants (timesteps).

As illustrated by Figure 11, the data triage 64 automates dynamic queries from the object contact predictor 221 of the vehicle control device 20 if a subject vehicle to the map 68. The query may include information including a current location of the subject vehicle 2, and a defined period into the future for which predicted paths are required. Optionally, the query may simply be an indication that data is sought, wherein the data triage 64 utilises the map 68 to assign a location to the subject vehicle 2 and the future period may be predefined. The data triage 64 selects an excerpt of the map to provide to the object contact predictor 221 in dependence on the current location of the subject vehicle, the dynamic map objects within, or predicted to come within, a particular radius of the subject vehicle map object within a defined period into the future. The particular radius may be partially derived from the confidence level associated with all pertinent predicted paths (i.e. which may be all predicted paths for dynamic map objects in the map representing the physical region of interest 200). A subset of the data forming the map is transmitted to the object contact predictor 221 I response to the query.

In the example of Figure 11, the subject vehicle 2 is Veh6, and the data triage 64 has determined to communicate the predicted paths of Veh1, Veh5, MO2, and MO4, to the vehicle control device 20 of Veh6.

The information transmitted to the on-board control device 20 of Veh6 is utilised by the object contact predictor 221 of the vehicle control device to compute the future risks of co-existence of the subject vehicle with the objects whose paths are predicted in said information. Embodiments may tailor the query response to include only objects that are at risk of hindering or impacting the mobility of the subject vehicle 2 in order to preserve bandwidth, reduce latency, and avoid processing delays and overheads associated with redundant processing.

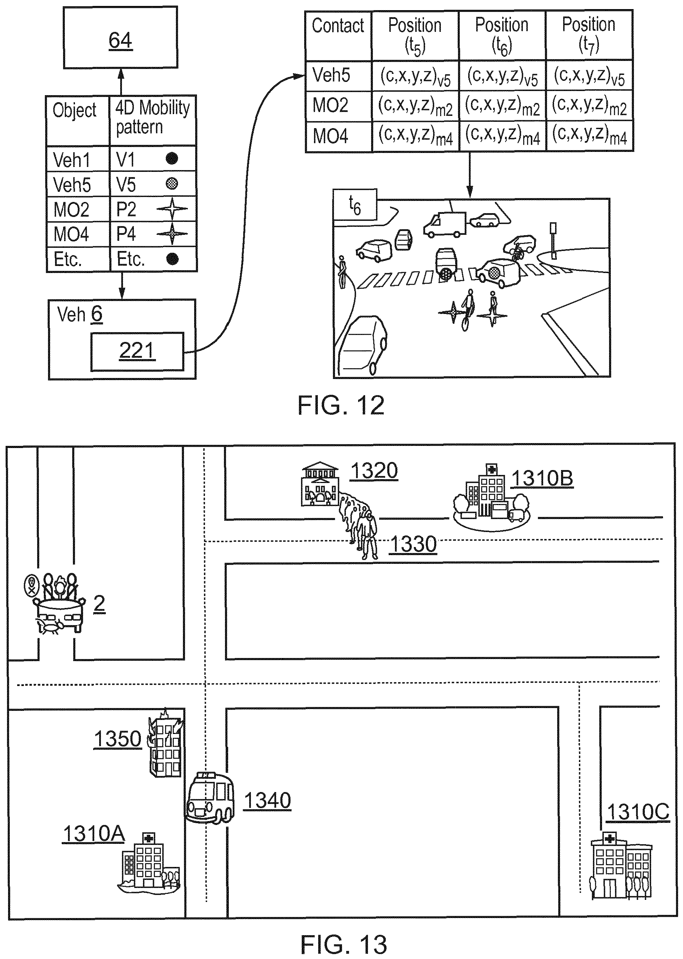

Figure 12 illustrates the role of the object contact predictor 221 in predicting coexistence of a subject vehicle with various dynamic objects in a physical region of interest 200 during a defined period of time into the future (i.e. between a present instant and a defined period into the future). For example, the length of the defined period may be determined by the data triage 64 or by the object contact predictor 221 in view of mobility of the subject vehicle as well as a confidence level associated with the predicted paths.

Following on from Figure 11 which shows that the object contact predictor 221 of Veh6 obtains predicted paths for Veh1, Veh5, MO2, and MO4 from the map 68, Figure 12 shows that the object contact predictor 221 has a future period of interest that is from t5 to t7, and so predicted locations, and associated confidence levels, of the dynamic mapped objects within the defined radius during time t5 to t7 are extracted and compared with the predicted path of the subject vehicle to identify co-existence, or distance reduced to within a contact threshold.

Figure 13 is an example illustrating that embodiments may be implemented in route optimisation tasks wherein an optimal route is one which avoids carriageway congestion and blockages in order to arrive at a target location at a particular time, or by minimising travel time. In such embodiments, the spatial interaction of the map event may be one or more predicted dynamic map objects restricting vehicle movement on a location on a route the vehicle control device is controlling the vehicle to follow, at a mapped instant at which the vehicle is predicted to be at said location. Predicted dynamic map objects are added to the static and dynamic map objects by the entity maintaining the map. The predicted dynamic map objects are a subset of dynamic map objects and appearing in the map at a mapped instant between a current time and the end of the future period, and the appearance of the predicted dynamic map object is predicted based on historical information relating to appearances of dynamic physical objects in the physical domain, the realtime sensor information from the physical domain, and/or notification of an event in the physical domain.

Embodiments may be implemented to maximise, minimise, or otherwise solve, an objective function. For example, the objective function may be to maximise use of time, or to minimise distance covered by a subject vehicle. Figure 13 illustrates an example in which an embodiment is used to minimise time required for a subject vehicle to reach a destination (hospital), or to ensure that the destination is reached within a time limit, or that medical treatment is received within a time limit.

The objective function that the embodiment is solving may be, for example, to reach a medical service for taking care of a moderate injury as fast as possible and within a maximum time limit of 15 minutes.

At time t0, a minor injury to a passenger is caused by sudden braking of the subject vehicle 2. The first computing apparatus 10 is notified of the objective function by the vehicle control device 20. The first computing apparatus 10 interrogates an information source to determine that there are three medical facilities 1310A-1310C with capacity for new patients and which can be reached by the subject vehicle 2 within the 15 minute maximum time limit.

At time t0, the first computing apparatus, seeking to identify a medical facility with availability to receive a new patient and which minimises travel time for the subject vehicle 2 to reach a destination, predicts that the subject vehicle 2 could reach medical facility 1310A in 10 minutes, medical facility 1310B in 12 minutes, and medical facility 1310C in 14 minutes.

Also at time t0, an event occurs in the physical domain, a fire in a residential building 1350. The map is notified of the event by a notification system. Based on historical information relating to similar events, congestion is predicted at the medical facility 1310A closest to the event. On the basis of the event notification and the historical information, the dynamic map predicts a 15 minute queue to receive treatment, which makes medical facility 1310A a less favourable option. Therefore, the dynamic map predicts congestion at medical facility 1310A, and uses this information to instruct the subject vehicle 2 to adopt one of the other medical facilities as a destination.

Based on historical information from previous days, and/or a notification of an event at the theatre 1320 being due to finish, the dynamic map predicts pedestrians on the street outside the theatre 1320 at a time 11 minutes after t0, at a location coincident with where the subject vehicle 2 would be at the same time if following a route to medical facility 1310B. The dynamic map predicts a 4 minute delay to the journey time, therefore predicting the subject vehicle 2 reaching medical facility 1310B in 16 minutes from time t0.

As a consequence of the event notifications and historical information available to the entity maintaining the map, the subject vehicle 2 is instructed to avoid any spatial interaction with the fire in building 1350 and associated casualties at medical facility 1310A, and to avoid any spatial interaction with pedestrians exiting the theatre 1320, and so is instructed to take a path with medical facility 1310C as destination.

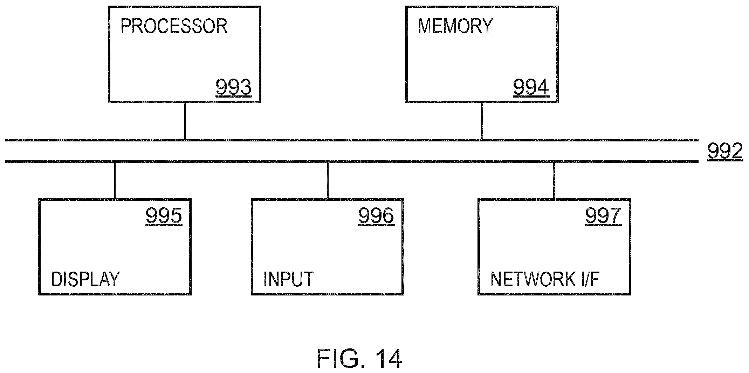

FIGURE 14 is a block diagram of a computing device 10, such as a server, which embodies the present invention, and which may be used to implement a method of an embodiment of instructing a motion path of a vehicle. The computing device comprises a processor 993, and memory, 14. The computing device also includes a network interface 997 for communication with other computing devices, for example with vehicle control devices 20 of invention embodiments. The first computing apparatus 10 may be a computing device of the form shown in Figure 14. The vehicle control device 20 may be a computing device of the form shown in Figure 14. Any other computing apparatus of an embodiment may be a computing device of the form shown in Figure 14.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device 10 and execute processing operations, for example executing code stored in the memory to implement the various different functions of methods of instructing a motion path of a vehicle, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The data triage 64 of, for example, Figures 3, 5, and 6, may be a processor 993 (or plurality thereof) executing processing instructions (a program) stored on a memory 994 and exchanging data via a network I/F 997. In particular, the processor 993 executes processing instructions to receive, via the network I/F, map data from the dynamic map and filter the data for the subject vehicle device 2. Furthermore, the processor 993 may execute processing instructions to transmit, via the network I/F 997, a map excerpt, and in particular, predicted paths, to the vehicle control device 20 for object contact prediction.

The maintenance of the four dimensional map 68, as shown, for example, in Figures 3, 5, and 6, may be a processor 993 (or plurality thereof) executing processing instructions (a program) stored on a memory 994 and exchanging data via a network I/F 997. In particular, the processor 993 executes processing instructions to receive, via the network I/F, realtime sensor data from sensors taking readings from the physical region of interest 200, and optionally also predicted paths for dynamic objects, and optionally also event notifications and historical information which may predict spatial interactions between dynamic map objects. Furthermore, the processor 993 may execute processing instructions to transmit, via the network I/F 997, a map excerpt, and in particular, predicted paths, to the vehicle control device 20 via the data triage 64, for object contact prediction by the object contact predictor 221.

The object contact predictor 221, as shown, for example, in Figures 4, 5, and 6, may be a processor 993 (or plurality thereof) executing processing instructions (a program) stored on a memory 994 and exchanging data via a network I/F 997. In particular, the processor 993 executes processing instructions to receive, via the network I/F, an excerpt of map data from the dynamic map 68, and including predicted paths for dynamic map objects, and optionally also event notifications and historical information which may predict spatial interactions between dynamic map objects. Furthermore, the processor 993 may execute processing instructions to instruct the vehicle control mechanism to adopt a motion path avoiding predicted spatial interactions with other objects.

Methods embodying the present invention may be carried out on a computing device such as that illustrated in Figure 14. Such a computing device need not have every component illustrated in Figure 14, and may be composed of a subset of those components. A method embodying the present invention may be carried out by a single computing device in communication with one or more data storage servers via a network. The computing device may be a data storage itself storing and maintaining the dynamic map 68.

A method embodying the present invention may be carried out by a plurality of computing devices operating in cooperation with one another. One or more of the plurality of computing devices may be a data storage server storing at least a portion of the dynamic map 68.

## Claims

1. A method of instructing a motion path of a mobile object (2) with wireless connectivity, the mobile object (2) being controllable in an autonomous or partially-autonomous mode by an on-board object control device; the method comprising:
at a first computing apparatus (10), maintaining (S101) a four-dimensional map of a physical region (200) of interest over a timeframe of interest, the map including static and dynamic map objects representing corresponding static (40) and dynamic (50) physical objects within the physical region (200), one of the dynamic map objects representing the mobile object (2), the four dimensions being three spatial dimensions and time, and the timeframe including a future period, being a defined duration into the future beyond the present, wherein maintaining the four-dimensional map includes:
augmenting the static and dynamic map objects with one or more predicted dynamic map objects, the predicted dynamic map objects being a subset of dynamic map objects and appearing in the map at a mapped instant between a current time and the end of the future period, and the appearance of the predicted dynamic map object being predicted based on historical information (82) relating to appearances of dynamic physical objects (50) in the physical domain, the realtime sensor information from the physical domain, and/or notification of an event in the physical domain;
the four-dimensional map coordinates of each dynamic map object being based on realtime sensor data from the physical region (200) indicating the location of the corresponding dynamic physical object (50), and a predicted path of the dynamic map object in the future period, wherein:
the realtime sensor data is provided from a plurality of sensors mounted on dynamic physical objects (50) and static physical objects (40) within the physical region (200), and
the first computing apparatus (10) is located between the plurality of sensors and centralised network entities;
using the four-dimensional map to determine a motion path for the mobile object (2) in the future period that solves an objective function with one or more factors dependent upon the motion path of the mobile object (2); and
instructing (S102) the mobile object (2) to follow the determined motion path.

2. The method according to claim 1, wherein the objective function is minimising spatial interactions between the dynamic map object representing the mobile object (2) and other static or dynamic map objects, a spatial interaction being a distance between the objects being less than a predefined threshold.

3. The method according to any of the preceding claims, wherein the objective function is optimising mobility per unit of pollution; or wherein the objective function is maximising vehicle occupancy, or wherein the objective function is enabling an electric vehicle to reach a defined destination in view of remaining battery life.

4. The method according to any of the preceding claims, wherein
the predicted path of each dynamic map object comprises a predicted three-spatial-dimension map coordinate at each of a plurality of timesteps during the future period;
for one or more dynamic map objects representing vehicles being driven in an autonomous or partially autonomous mode by a respective on-board control device, the predicted path of the mobile object (2) is computed by the on-board control device and transmitted to the first computing apparatus (10) for mapping.

5. The method according to claim 4, wherein
maintaining the four-dimensional map comprises aggregating, from a plurality of sensors, the realtime sensor data indicating the location within the physical region (200) of dynamic physical objects (50) corresponding to dynamic map objects; and
the mapping the three-spatial-dimension map coordinate at each of the plurality of timesteps during the future period for each dynamic map object is based on the location of the corresponding dynamic physical object (50) in the realtime sensor data.

6. The method according to claim 5, wherein
the plurality of sensors includes sensors mounted on dynamic physical objects (50) within the physical region (200), and sensors mounted on static physical objects (40) and configured to take readings of the physical region (200).

7. The method according to claim 5 or 6, wherein
the plurality of sensors includes sensors mounted on dynamic physical objects (50) within the physical region (200), sensors mounted on the mobile object (2), sensors mounted on stationary objects within the physical region (200), and/or sensors mounted on dynamic physical objects (50) outside of the physical region (200) and taking readings from within the physical region (200).

8. The method according to claim 2, wherein
the spatial interaction between the dynamic object representing the mobile object (2) and another of the static and dynamic map objects is contemporaneous three-spatial-dimension map coordinates of the two objects being within a defined contact threshold distance.

9. The method according to claim 8, wherein
the spatial interaction is identified by comparing the predicted path of the dynamic map object representing the mobile object (2) with: the predicted paths of dynamic map objects having a current location within a first defined threshold distance of the current location of the dynamic map object representing the mobile object (2); and with the locations of static map objects within a second defined threshold distance of the current location of the dynamic map object representing the mobile object (2).

10. The method according to any of the preceding claims, further comprising:
at a second computing apparatus, borne by the mobile object (2):
periodically querying the first computing apparatus (10); and
at the first computing apparatus (10):
responding to the query by transmitting to the second computing apparatus a query response including the predicted path, or a portion thereof, of any dynamic map object having a current position, or predicted path, indicating a distance from the mobile object (2) is or will be within a distance defined by a distance threshold, at any time during a future period of interest; and
at the second computing apparatus:
using the predicted path of the mobile object (2) and the predicted paths of the dynamic map objects in the query response to identify, as a map event, any dynamic map object having a predicted path contemporaneously within a defined contact threshold distance of the predicted path of the mobile object (2) during the future period of interest.

11. The method according to claim 1, wherein
the spatial interaction of the map event is one or more of the predicted dynamic map objects restricting mobile object (2) movement on a location on a route the on-board control device is controlling the mobile object (2) to follow, at a mapped instant at which the mobile object (2) is predicted to be at said location.

12. A system for instructing a mobile object (2) with wireless connectivity, the mobile object (2) being controllable in an autonomous or partially-autonomous mode by an on-board control device; the system comprising:
a first computing apparatus (10) comprising a memory and a processor, the memory storing processing instructions which, when executed by the processor, cause the processor to perform a process including:
maintaining a four-dimensional map of a physical region (200) of interest over a timeframe of interest, the map including static and dynamic map objects representing corresponding static (40) and dynamic physical objects (50) within the physical region (200), one of the dynamic map objects representing the mobile object (2), the four dimensions being three spatial dimensions and time, and the timeframe including a future period, being a defined duration into the future beyond the present, wherein maintaining the four-dimensional map includes:
augmenting the static and dynamic map objects with one or more predicted dynamic map objects, the predicted dynamic map objects being a subset of dynamic map objects and appearing in the map at a mapped instant between a current time and the end of the future period, and the appearance of the predicted dynamic map object being predicted based on historical information (82) relating to appearances of dynamic physical objects (50) in the physical domain, the realtime sensor information from the physical domain, and/or notification of an event in the physical domain;
the four-dimensional map coordinates of each dynamic map object being based on realtime sensor data from the physical region (200) indicating the location of the corresponding dynamic physical object (50), and a predicted path of the dynamic map object in the future period, wherein:
the realtime sensor data is provided from a plurality of sensors mounted on dynamic physical objects (50) and static physical objects (40) within the physical region (200), and
the first computing apparatus (10) is located between the plurality of sensors and centralised network entities;
an on-board control device, the on-board control device comprising an on-board control device memory and an on-board control device processor, the on-board control device memory storing processing instructions which, when executed by the on-board control device processor, cause the on-board control device processor to perform a process including:
using the four-dimensional map to determine a motion path for the mobile object (2) in the future period that solves an objective function with one or more factors dependent upon the motion path of the mobile object (2); and
instructing the mobile object (2) to follow the determined motion path.

13. An apparatus for instructing a motion path of a mobile object (2) with wireless connectivity, the mobile object (2) being controllable in an autonomous or partially-autonomous mode by an on-board control device; the apparatus comprising:
a first computing apparatus (10) comprising a memory and a processor, the memory storing processing instructions which, when executed by the processor, cause the processor to perform a process including:
maintaining a four-dimensional map of a physical region (200) of interest over a timeframe of interest, the map including static and dynamic map objects representing corresponding static (40) and dynamic physical objects (50) within the physical region (200), one of the dynamic map objects representing the mobile object (2), the four dimensions being three spatial dimensions and time, and the timeframe including a future period, being a defined duration into the future beyond the present, wherein maintaining the four-dimensional map includes:
augmenting the static and dynamic map objects with one or more predicted dynamic map objects, the predicted dynamic map objects being a subset of dynamic map objects and appearing in the map at a mapped instant between a current time and the end of the future period, and the appearance of the predicted dynamic map object being predicted based on historical information (82) relating to appearances of dynamic physical objects (50) in the physical domain, the realtime sensor information from the physical domain, and/or notification of an event in the physical domain;
the four-dimensional map coordinates of each dynamic map object being based on realtime sensor data from the physical region (200) indicating the location of the corresponding dynamic physical object (50), and a predicted path of the dynamic map object in the future period, wherein:
the realtime sensor data is provided from a plurality of sensors mounted on dynamic physical objects (50) and static physical objects (40) within the physical region (200), and
the first computing apparatus (10) is located between the plurality of sensors and centralised network entities;
using the four-dimensional map to determine a motion path for the mobile object (2) in the future period that solves an objective function with one or more factors dependent upon the motion path of the mobile object (2); and
instructing the mobile object (2) to follow the determined motion path.

14. A computer program which, when executed by a computing apparatus, causes the computing apparatus to perform a method according to any of claims 1 to 11.

## Patentansprüche

1. Verfahren zum Anweisen eines Bewegungspfades eines mobilen Objekts (2) mit drahtloser Konnektivität, wobei das mobile Objekt (2) in einem autonomen oder teilautonomen Modus durch eine bordeigene Objektsteuervorrichtung steuerbar ist; wobei das Verfahren umfasst:
an einer ersten Rechenvorrichtung (10), Pflegen (S101) einer vierdimensionalen Karte einer interessierenden physischen Region (200) über einen interessierenden Zeitrahmen, wobei die Karte statische und dynamische Kartenobjekte aufweist, die statische (40) und
dynamische (50) physische Objekte innerhalb der physischen Region (200) repräsentieren, wobei eines der dynamischen Kartenobjekte das mobile Objekt (2) repräsentiert, wobei die vier Dimensionen drei räumliche Dimensionen und Zeit sind, und der Zeitrahmen eine zukünftige Periode aufweist, die eine definierte Dauer in die Zukunft über die Gegenwart hinaus ist, wobei das Pflegen der vierdimensionalen Karte aufweist:
Erweitern der statischen und dynamischen Kartenobjekte mit einem oder mehreren vorhergesagten dynamischen Kartenobjekten, wobei die vorhergesagten dynamischen Kartenobjekte eine Teilmenge von dynamischen Kartenobjekten sind und in der Karte zu einem abgebildeten Zeitpunkt zwischen einer aktuellen Zeit und dem Ende der zukünftigen Periode erscheinen, und wobei das Erscheinen des vorhergesagten dynamischen Kartenobjekts auf historischen Informationen (82) in Bezug auf das Erscheinen dynamischer physischer Objekte (50) in der physischen Domäne, den Echtzeitsensorinformationen aus der physischen Domäne und/oder einer Benachrichtigung über ein Ereignis in der physischen Domäne basiert;
wobei die vierdimensionalen Kartenkoordinaten jedes dynamischen Kartenobjekts auf Echtzeitsensordaten aus der physischen Region (200), die den Ort des entsprechenden dynamischen physischen Objekts (50) angeben, und einem vorhergesagten Weg des dynamischen Kartenobjekts in der zukünftigen Periode basieren, wobei:
die Echtzeitsensordaten von mehreren Sensoren bereitgestellt werden, die an dynamischen physischen Objekten (50) und statischen physischen Objekten (40) innerhalb der physischen Region (200) angebracht sind, und
die erste Rechenvorrichtung (10) zwischen den mehreren Sensoren und zentralisierten Netzwerkeinheiten angeordnet ist;
Verwenden der vierdimensionalen Karte, um einen Bewegungspfad für das mobile Objekt (2) in der zukünftigen Periode zu bestimmen, der eine Zielfunktion mit einem oder mehreren Faktoren in Abhängigkeit von dem Bewegungspfad des mobilen Objekts (2) löst; und
Anweisen (S102) des mobilen Objekts (2), dem bestimmten Bewegungspfad zu folgen.

2. Verfahren nach Anspruch 1, wobei die Zielfunktion Minimieren von räumlichen Interaktionen zwischen dem dynamischen Kartenobjekt, das das mobile Objekt (2) repräsentiert, und anderen statischen oder dynamischen Kartenobjekten ist, wobei eine räumliche Interaktion ein Abstand zwischen den Objekten kleiner als ein vordefinierter Schwellenwert ist.

3. Verfahren nach einem der vorhergehenden Ansprüche, wobei die Zielfunktion Optimieren einer Mobilität pro Schadstoffeinheit ist; oder wobei die Zielfunktion Maximieren der Fahrzeugbelegung ist, oder wobei die Zielfunktion es einem Elektrofahrzeug ermöglicht, in Anbetracht der verbleibende Batterielebensdauer ein definiertes Ziel zu erreichen.

4. Verfahren nach einem der vorhergehenden Ansprüche, wobei
der vorhergesagte Pfad jedes dynamischen Kartenobjekts eine vorhergesagte räumliche dreidimensionale Kartenkoordinate zu jedem von mehreren Zeitschritten während der zukünftigen Periode umfasst;
für eines oder mehrere dynamische Kartenobjekte, die Fahrzeuge repräsentieren, die in einem autonomen oder teilautonomen Modus von einer jeweiligen bordeigenen Steuervorrichtung gefahren werden, der vorhergesagte Pfad des mobilen Objekts (2) von der bordeigenen Steuervorrichtung berechnet und zum Abbilden an die erste Rechenvorrichtung (10) gesendet wird.

5. Verfahren nach Anspruch 4, wobei
das Pflegen der vierdimensionalen Karte Aggregieren, von mehreren Sensoren, der Echtzeitsensordaten, die den Ort innerhalb der physischen Region (200) von dynamischen physischen Objekten (50), die dynamischen Kartenobjekten entsprechen, angeben, umfasst; und
das Abbilden der räumlichen dreidimensionalen Kartenkoordinate an jedem der mehreren Zeitschritten während der zukünftigen Periode für jedes dynamische Kartenobjekt auf den Ort des entsprechenden dynamischen physischen Objekts (50) in den Echtzeitsensordaten basiert.

6. Verfahren nach Anspruch 5, wobei
die mehreren Sensoren, die an dynamischen physischen Objekten (50) innerhalb der physischen Region (200) angebracht sind, und Sensoren, die an statischen physischen Objekten (40) angebracht sind und dazu ausgelegt sind, Messwerte der physischen Region (200) aufzunehmen, aufweisen.

7. Verfahren nach Anspruch 5 oder 6, wobei
die mehreren Sensoren, die an dynamischen physischen Objekten (50) innerhalb der physischen Region (200) angebracht sind, Sensoren, die an dem mobilen Objekt (2) angebracht sind, Sensoren, die an stationären Objekten innerhalb der physischen Region (200) angebracht sind, und/oder Sensoren, die an dynamischen physischen Objekten (50) außerhalb der physischen Region (200) angebracht sind und Messwerte von innerhalb der physischen Region (200) aufnehmen, aufweisen.

8. Verfahren nach Anspruch 2, wobei
die räumliche Interaktion zwischen dem dynamischen Objekt, das das mobile Objekt (2) repräsentiert, und einem anderen der statischen und dynamischen Kartenobjekte ist, dass räumliche dreidimensionale Kartenkoordinaten der beiden Objekte gleichzeitig innerhalb eines definierten Kontaktschwellenabstands liegen.

9. Verfahren nach Anspruch 8, wobei
die räumliche Interaktion identifiziert wird, indem der vorhergesagte Pfad des dynamischen Kartenobjekts, das das mobile Objekt (2) repräsentiert, verglichen wird mit: dem vorhergesagten Pfaden von dynamischen Kartenobjekten mit einem aktuellen Ort innerhalb eines ersten definierten Schwellenabstands von dem aktuellen Ort des dynamischen Kartenobjekts, das das mobile Objekts (2) repräsentiert; und mit den Orten von statischen Kartenobjekten innerhalb eines zweiten definierten Schwellenabstands von dem aktuellen Ort des dynamischen Kartenobjekts, das das mobile Objekt (2) repräsentiert.

10. Verfahren nach einem der vorhergehenden Ansprüche, ferner umfassend:
an einer zweiten Rechenvorrichtung, die von dem mobilen Objekt (2) getragen wird:
periodisches Abfragen der ersten Rechenvorrichtung (10); und
an der ersten Rechenvorrichtung (10):
Reagieren auf die Abfrage durch Senden einer Abfrageantwort, die den vorhergesagten Pfad, oder einen Teil davon, eines beliebigen dynamischen Kartenobjekts mit einem aktuellen Ort, oder einem vorhergesagten Pfad, aufweist, der angibt, dass ein Abstand von dem mobilen Objekt (2) sich innerhalb eines durch einen Abstandsschwellenwert definierten Abstands befinden oder befinden wird, zu einer beliebigen Zeit während einer interessierenden zukünftigen Periode;
und an der zweiten Rechenvorrichtung:
Verwenden des vorhergesagten Pfades des mobilen Objekts (2) und der vorhergesagten Pfade der dynamischen Kartenobjekte in der Abfrageantwort, um jedes dynamische Kartenobjekt mit einem vorhergesagten Pfad, der sich gleichzeitig dem vorhergesagten Pfad des mobilen Objekts (2) innerhalb eines definierten Kontaktschwellenabstands befindet, während der zukünftigen interessierenden Periode, als Kartenereignis zu identifizieren.

11. Verfahren nach Anspruch 1, wobei
die räumliche Interaktion des Kartenereignisses ist, dass eines oder mehrere der vorhergesagten dynamischen Kartenobjekte eine Bewegung des mobilen Objekts (2) an einem Ort auf einer Route, der zu folgen die bordeigene Steuervorrichtung das mobile Objekt (2) steuert, einschränken, an einem abgebildeten Zeitpunkt, zu dem vorhergesagt wird, dass sich das mobile Objekt (2) an dem Ort befindet.

12. System zum Anweisen eines mobilen Objekts (2) mit drahtloser Konnektivität, wobei das mobile Objekt (2) in einem autonomen oder teilautonomen Modus durch eine Bordsteuervorrichtung steuerbar ist; wobei das System umfasst:
eine erste Rechenvorrichtung (10), die einen Speicher und einen Prozessor umfasst, wobei der Speicher Verarbeitungsanweisungen speichert, die bei Ausführung durch den Prozessor den Prozessor veranlassen, einen Prozess durchzuführen, der aufweist:
Pflegen einer vierdimensionalen Karte einer interessierenden physischen Region (200) über einen interessierenden Zeitrahmen, wobei die Karte statische und dynamische Kartenobjekte aufweist, die statische (40) und dynamische physikalische Objekte (50) innerhalb der physischen Region (200) repräsentieren, wobei eines der dynamischen Kartenobjekte das mobile Objekt (2) repräsentiert, wobei die vier Dimensionen drei räumliche Dimensionen und Zeit sind, und der Zeitrahmen eine zukünftige Periode aufweist, die eine definierte Dauer in die Zukunft über die Gegenwart hinaus ist, wobei das Pflegen der vierdimensionalen Karte aufweist:
Erweitern der statischen und dynamischen Kartenobjekte mit einem oder mehreren vorhergesagten dynamischen Kartenobjekten, wobei die vorhergesagten dynamischen Kartenobjekte eine Teilmenge von dynamischen Kartenobjekten sind und in der Karte zu einem abgebildeten Zeitpunkt zwischen einer aktuellen Zeit und dem Ende der zukünftigen Periode erscheinen, und wobei das Erscheinen des vorhergesagten dynamischen Kartenobjekts auf historischen Informationen (82) in Bezug auf das Erscheinen dynamischer physischer Objekte (50) in der physischen Domäne, den Echtzeitsensorinformationen aus der physischen Domäne und/oder einer Benachrichtigung über ein Ereignis in der physischen Domäne basiert;
wobei die vierdimensionalen Kartenkoordinaten jedes dynamischen Kartenobjekts auf Echtzeitsensordaten aus der physischen Region (200), die den Ort des entsprechenden dynamischen physischen Objekts (50) angeben, und einem vorhergesagten Pfad des dynamischen Kartenobjekts in der zukünftigen Periode basieren, wobei:
die Echtzeitsensordaten von mehreren Sensoren bereitgestellt werden, die an dynamischen physischen Objekten (50) und statischen physischen Objekten (40) innerhalb der physischen Region (200) angebracht sind, und
die erste Rechenvorrichtung (10) zwischen den mehreren Sensoren und zentralisierten Netzwerkeinheiten angeordnet ist;
eine bordeigene Steuervorrichtung, wobei die bordeigene Steuervorrichtung einen bordeigenen Steuervorrichtungsspeicher und einen bordeigenen Vorrichtungsprozessor umfasst, wobei der bordeigene Vorrichtungsspeicher Verarbeitungsanweisungen speichert, die bei Ausführung durch den bordeigene Steuervorrichtungsprozessor den bordeigene Steuervorrichtungsprozessor veranlassen, einen Prozess durchzuführen, der aufweist:
Verwenden der vierdimensionalen Karte, um einen Bewegungspfad für das mobile Objekt (2) in der zukünftigen Periode zu bestimmen, der eine Zielfunktion mit einem oder mehreren Faktoren in Abhängigkeit von dem Bewegungspfad des mobilen Objekts (2) löst; und Anweisen des mobilen Objekts (2), dem bestimmten Bewegungspfad zu folgen.

13. Vorrichtung zum Anweisen eines Bewegungspfades eines mobilen Objekts (2) mit drahtloser Konnektivität, wobei das mobile Objekt (2) in einem autonomen oder teilautonomen Modus durch eine bordeigene Steuervorrichtung steuerbar ist; wobei die Vorrichtung umfasst:
eine erste Rechenvorrichtung (10), die einen Speicher und einen Prozessor umfasst, wobei der Speicher Verarbeitungsanweisungen speichert, die bei Ausführung durch den Prozessor den Prozessor veranlassen, einen Prozess durchzuführen, der aufweist:
Pflegen einer vierdimensionalen Karte einer interessierenden physischen Region (200) über einen interessierenden Zeitrahmen, wobei die Karte statische und dynamische Kartenobjekte aufweist, die entsprechende statische (40) und dynamische physikalische Objekte (50) innerhalb der physischen Region (200) repräsentieren, wobei eines der dynamischen Kartenobjekte das mobile Objekt (2) repräsentiert, wobei die vier Dimensionen drei räumliche Dimensionen und Zeit sind, und der Zeitrahmen eine zukünftige Periode aufweist, eine definierte Dauer in die Zukunft über die Gegenwart hinaus ist, wobei das Pflegen der vierdimensionalen Karte aufweist:
Erweitern der statischen und dynamischen Kartenobjekte mit einem oder mehreren vorhergesagten dynamischen Kartenobjekten, wobei die vorhergesagten dynamischen Kartenobjekte eine Teilmenge von dynamischen Kartenobjekten sind und in der Karte zu einem abgebildeten Zeitpunkt zwischen einer aktuellen Zeit und dem Ende der zukünftigen Periode erscheinen, und wobei das Erscheinen des vorhergesagten dynamischen Kartenobjekts auf historischen Informationen (82) in Bezug auf das Erscheinen dynamischer physischer Objekte (50) in der physischen Domäne, den Echtzeitsensorinformationen aus der physischen Domäne und/oder einer Benachrichtigung über ein Ereignis in der physischen Domäne basiert;
wobei die vierdimensionalen Kartenkoordinaten jedes dynamischen Kartenobjekts auf Echtzeitsensordaten aus der physischen Region (200), die den Ort des entsprechenden dynamischen physischen Objekts (50) angeben, und einem vorhergesagten Weg des dynamischen Kartenobjekts in der zukünftigen Periode basieren, wobei:
die Echtzeitsensordaten von mehreren Sensoren bereitgestellt werden, die an dynamischen physischen Objekten (50) und statischen physischen Objekten (40) innerhalb der physischen Region (200) angebracht sind, und
die erste Rechenvorrichtung (10) zwischen den mehreren Sensoren und zentralisierten Netzwerkeinheiten angeordnet ist;
Verwenden der vierdimensionalen Karte, um einen Bewegungspfad für das mobile Objekt (2) in der zukünftigen Periode zu bestimmen, der eine Zielfunktion mit einem oder mehreren Faktoren in Abhängigkeit von dem Bewegungspfad des mobilen Objekts (2) löst; und Anweisen des mobilen Objekts (2), dem bestimmten Bewegungspfad zu folgen.

14. Computerprogramm, das, bei Ausführung durch eine Rechenvorrichtung, die Rechenvorrichtung veranlasst, ein Verfahren nach einem der Ansprüche 1 bis 11 durchzuführen.

## Revendications

1. Procédé de commande d'un trajet de déplacement d'un objet mobile (2) disposant d'une connectivité sans fil, l'objet mobile (2) pouvant être commandé dans un mode autonome ou partiellement autonome par un dispositif de commande d'objet embarqué ; le procédé comprenant les étapes ci-dessous consistant à :
au niveau d'un premier appareil informatique (10), maintenir (S101) une carte quadridimensionnelle d'une région physique (200) d'intérêt sur une période de temps d'intérêt, la carte incluant des objets cartographiques statiques et dynamiques représentant des objets physiques statiques (40) et dynamiques (50) correspondants au sein de la région physique (200), l'un des objets cartographiques dynamiques représentant l'objet mobile (2), les quatre dimensions correspondant à trois dimensions spatiales et à la dimension temporelle, et la période de temps incluant une période future, qui correspond à une durée définie dans le futur au-delà du présent, dans lequel l'étape de maintien de la carte quadridimensionnelle inclut l'étape ci-dessous consistant à :
augmenter les objets cartographiques statiques et dynamiques avec un ou plusieurs objets cartographiques dynamiques prédits, les objets cartographiques dynamiques prédits correspondant à un sous-ensemble d'objets cartographiques dynamiques et apparaissant dans la carte à un instant mis en correspondance entre une heure en cours et la fin de la période future, et l'apparition de l'objet cartographique dynamique prédit étant prédite sur la base d'informations historiques (82) connexes à des apparitions d'objets physiques dynamiques (50) dans le domaine physique, des informations de capteur en temps réel provenant du domaine physique, et/ou de la notification d'un événement dans le domaine physique ;
les coordonnées cartographiques quadridimensionnelles de chaque objet cartographique dynamique étant basées sur des données de capteur en temps réel provenant de la région physique (200) indiquant l'emplacement de l'objet physique dynamique correspondant (50), et un trajet prédit de l'objet cartographique dynamique dans la période future, dans lequel :
les données de capteur en temps réel sont fournies à partir d'une pluralité de capteurs montés sur des objets physiques dynamiques (50) et des objets physiques statiques (40) au sein de la région physique (200) ; et
le premier appareil informatique (10) est situé entre la pluralité de capteurs et des entités de réseau centralisé ;
utiliser la carte quadridimensionnelle en vue de déterminer un trajet de déplacement pour l'objet mobile (2) dans la période future qui résout une fonction d'objectif avec un ou plusieurs facteurs dépendant du trajet de déplacement de l'objet mobile (2) ; et
donner instruction (S102) à l'objet mobile (2) de suivre le trajet de déplacement déterminé.

2. Procédé selon la revendication 1, dans lequel la fonction d'objectif consiste à minimiser des interactions spatiales entre l'objet cartographique dynamique représentant l'objet mobile (2) et d'autres objets cartographiques statiques ou dynamiques, une interaction spatiale correspondant à une distance entre les objets qui est inférieure à un seuil prédéfini.

3. Procédé selon l'une quelconque des revendications précédentes, dans lequel la fonction d'objectif consiste à optimiser la mobilité par unité de pollution ; ou dans lequel la fonction d'objectif consiste à maximiser une occupation de véhicule, ou dans lequel la fonction d'objectif consiste à permettre à un véhicule électrique d'atteindre une destination définie compte tenu d'une autonomie restante de la batterie.

4. Procédé selon l'une quelconque des revendications précédentes, dans lequel :
le trajet prédit de chaque objet cartographique dynamique comprend une coordonnée cartographique tridimensionnelle spatiale prédite à chaque pas de temps d'une pluralité de pas de temps pendant la période future ;
pour un ou plusieurs objets cartographiques dynamiques représentant des véhicules conduits en mode autonome ou partiellement autonome par un dispositif de commande embarqué respectif, le trajet prédit de l'objet mobile (2) est calculé par le dispositif de commande embarqué et transmis au premier appareil informatique (10) à des fins de mise en correspondance.

5. Procédé selon la revendication 4, dans lequel :
l'étape de maintien de la carte quadridimensionnelle comprend l'étape consistant à agréger, à partir d'une pluralité de capteurs, les données de capteur en temps réel indiquant l'emplacement, au sein de la région physique (200), d'objets physiques dynamiques (50) correspondant à des objets cartographiques dynamiques ; et
l'étape de mise en correspondance de la coordonnée cartographique tridimensionnelle spatiale, à chaque pas de temps de la pluralité de pas de temps pendant la période future, pour chaque objet cartographique dynamique, est basée sur l'emplacement de l'objet physique dynamique correspondant (50) dans les données de capteur en temps réel.

6. Procédé selon la revendication 5, dans lequel :
la pluralité de capteurs inclut des capteurs montés sur des objets physiques dynamiques (50) au sein de la région physique (200), et des capteurs montés sur des objets physiques statiques (40) et configurés de manière à effectuer des mesures de la région physique (200).

7. Procédé selon la revendication 5 ou 6, dans lequel :
la pluralité de capteurs inclut des capteurs montés sur des objets physiques dynamiques (50) au sein de la région physique (200), des capteurs montés sur l'objet mobile (2), des capteurs montés sur des objets stationnaires au sein de la région physique (200), et/ou des capteurs montés sur des objets physiques dynamiques (50) à l'extérieur de la région physique (200) et effectuant des mesures à partir de l'intérieur de la région physique (200).

8. Procédé selon la revendication 2, dans lequel :
l'interaction spatiale entre l'objet dynamique, représentant l'objet mobile (2), et un autre objet parmi les objets cartographiques statiques et dynamiques, correspond à des coordonnées cartographiques tridimensionnelles spatiales simultanées des deux objets situés à une distance seuil de contact définie.

9. Procédé selon la revendication 8, dans lequel :
l'interaction spatiale est identifiée en comparant le trajet prédit de l'objet cartographique dynamique représentant l'objet mobile (2) : aux trajets prédits d'objets cartographiques dynamiques présentant un emplacement en cours à une première distance de seuil définie de l'emplacement en cours de l'objet cartographique dynamique représentant l'objet mobile (2) ; et aux emplacements d'objets cartographiques statiques à une seconde distance de seuil définie de l'emplacement en cours de l'objet cartographique dynamique représentant l'objet mobile (2).

10. Procédé selon l'une quelconque des revendications précédentes, comprenant en outre les étapes ci-dessous consistant à :
au niveau d'un second appareil informatique, porté par l'objet mobile (2) :
interroger périodiquement le premier appareil informatique (10) ; et
au niveau du premier appareil informatique (10) :
répondre à l'interrogation en transmettant, au second appareil informatique, une réponse à l'interrogation incluant le trajet prédit, ou une partie de celui-ci, de tout objet cartographique dynamique présentant une position en cours, ou un trajet prédit, indiquant qu'une distance par rapport à l'objet mobile (2) est ou sera à une distance définie par un seuil de distance, à tout moment pendant une période future d'intérêt ; et
au niveau du second appareil informatique :
utiliser le trajet prédit de l'objet mobile (2) et les trajets prédits des objets cartographiques dynamiques dans la réponse à l'interrogation pour identifier, en tant qu'un événement de carte, tout objet cartographique dynamique présentant un trajet prédit simultanément à une distance de seuil de contact définie du trajet prédit de l'objet mobile (2) pendant la période future d'intérêt.

11. Procédé selon la revendication 1, dans lequel :
l'interaction spatiale de l'événement de carte correspond à un ou plusieurs des objets cartographiques dynamiques prédits limitant un mouvement d'objet mobile (2) au niveau d'un emplacement sur un itinéraire que le dispositif de commande embarqué commande à l'objet mobile (2) de suivre, à un instant mis en correspondance auquel il est prédit que l'objet mobile (2) se situe audit emplacement.

12. Système permettant de commander un objet mobile (2) disposant d'une connectivité sans fil, l'objet mobile (2) pouvant être commandé dans un mode autonome ou partiellement autonome par un dispositif de commande embarqué ; le système comprenant :
un premier appareil informatique (10) comprenant une mémoire et un processeur, la mémoire stockant des instructions de traitement qui, lorsqu'elles sont exécutées par le processeur, amènent le processeur à mettre en œuvre un processus incluant les étapes ci-dessous consistant à : maintenir une carte quadridimensionnelle d'une région physique (200) d'intérêt sur une période de temps d'intérêt, la carte incluant des objets cartographiques statiques et dynamiques représentant des objets physiques statiques (40) et dynamiques (50) correspondants au sein de la région physique (200), l'un des objets cartographiques dynamiques représentant l'objet mobile (2), les quatre dimensions correspondant à trois dimensions spatiales et à la dimension temporelle, et la période de temps incluant une période future, qui correspond à une durée définie dans le futur au-delà du présent, dans lequel l'étape de maintien de la carte quadridimensionnelle inclut l'étape ci-dessous consistant à :
augmenter les objets cartographiques statiques et dynamiques avec un ou plusieurs objets cartographiques dynamiques prédits, les objets cartographiques dynamiques prédits correspondant à un sous-ensemble d'objets cartographiques dynamiques et apparaissant dans la carte à un instant mis en correspondance entre une heure en cours et la fin de la période future, et l'apparition de l'objet cartographique dynamique prédit étant prédite sur la base d'informations historiques (82) connexes à des apparitions d'objets physiques dynamiques (50) dans le domaine physique, des informations de capteur en temps réel provenant du domaine physique, et/ou de la notification d'un événement dans le domaine physique ;
les coordonnées cartographiques quadridimensionnelles de chaque objet cartographique dynamique étant basées sur des données de capteur en temps réel provenant de la région physique (200) indiquant l'emplacement de l'objet physique dynamique correspondant (50), et un trajet prédit de l'objet cartographique dynamique dans la période future, dans lequel :
les données de capteur en temps réel sont fournies à partir d'une pluralité de capteurs montés sur des objets physiques dynamiques (50) et des objets physiques statiques (40) au sein de la région physique (200) ; et
le premier appareil informatique (10) est situé entre la pluralité de capteurs et des entités de réseau centralisé ;
un dispositif de commande embarqué, le dispositif de commande embarqué comprenant une mémoire de dispositif de commande embarqué et un processeur de dispositif de commande embarqué, la mémoire de dispositif de commande embarqué stockant des instructions de traitement qui, lorsqu'elles sont exécutées par le processeur de dispositif de commande embarqué, amènent le processeur de dispositif de commande embarqué à mettre en œuvre un processus incluant les étapes ci-dessous consistant à :
utiliser la carte quadridimensionnelle en vue de déterminer un trajet de déplacement pour l'objet mobile (2) dans la période future qui résout une fonction d'objectif avec un ou plusieurs facteurs dépendant du trajet de déplacement de l'objet mobile (2) ; et
donner instruction à l'objet mobile (2) de suivre le trajet de déplacement déterminé.

13. Appareil destiné à commander un trajet de déplacement d'un objet mobile (2) disposant d'une connectivité sans fil, l'objet mobile (2) pouvant être commandé en mode autonome ou partiellement autonome par un dispositif de commande embarqué ; l'appareil comprenant :
un premier appareil informatique (10) comprenant une mémoire et un processeur, la mémoire stockant des instructions de traitement qui, lorsqu'elles sont exécutées par le processeur, amènent le processeur à mettre en œuvre un processus incluant les étapes ci-dessous consistant à :
maintenir une carte quadridimensionnelle d'une région physique (200) d'intérêt sur une période de temps d'intérêt, la carte incluant des objets cartographiques statiques et dynamiques représentant des objets physiques statiques (40) et dynamiques (50) correspondants au sein de la région physique (200), l'un des objets cartographiques dynamiques représentant l'objet mobile (2), les quatre dimensions correspondant à trois dimensions spatiales et à la dimension temporelle, et la période de temps incluant une période future, qui correspond à une durée définie dans le futur au-delà du présent, dans lequel l'étape de maintien de la carte quadridimensionnelle inclut l'étape ci-dessous consistant à :
augmenter les objets cartographiques statiques et dynamiques avec un ou plusieurs objets cartographiques dynamiques prédits, les objets cartographiques dynamiques prédits correspondant à un sous-ensemble d'objets cartographiques dynamiques et apparaissant dans la carte à un instant mis en correspondance entre une heure en cours et la fin de la période future, et l'apparition de l'objet cartographique dynamique prédit étant prédite sur la base d'informations historiques (82) connexes à des apparitions d'objets physiques dynamiques (50) dans le domaine physique, des informations de capteur en temps réel provenant du domaine physique, et/ou de la notification d'un événement dans le domaine physique ;
les coordonnées cartographiques quadridimensionnelles de chaque objet cartographique dynamique étant basées sur des données de capteur en temps réel provenant de la région physique (200) indiquant l'emplacement de l'objet physique dynamique correspondant (50), et un trajet prédit de l'objet cartographique dynamique dans la période future, dans lequel :
les données de capteur en temps réel sont fournies à partir d'une pluralité de capteurs montés sur des objets physiques dynamiques (50) et des objets physiques statiques (40) au sein de la région physique (200) ; et
le premier appareil informatique (10) est situé entre la pluralité de capteurs et des entités de réseau centralisé ;
utiliser la carte quadridimensionnelle en vue de déterminer un trajet de déplacement pour l'objet mobile (2) dans la période future qui résout une fonction d'objectif avec un ou plusieurs facteurs dépendant du trajet de déplacement de l'objet mobile (2) ; et
donner instruction à l'objet mobile (2) de suivre le trajet de déplacement déterminé.

14. Programme informatique qui, lorsqu'il est exécuté par un appareil informatique, amène l'appareil informatique à mettre en œuvre un procédé selon l'une quelconque des revendications 1 à 11.
